# EUROPEAN PATENT APPLICATION

(11) **EP 4 787 905 A1**
(43) Date of publication of application: **05.08.2026**
(21) Application number: 24876304.7
(22) Date of filing: 02.09.2024
(51) Int. Cl.: H04W 4/029

(54) **COMMUNICATION METHOD AND APPARATUS**

(30) Priority: 08.10.2023 CN 202311304143
(71) Applicant: HUAWEI TECHNOLOGIES CO., LTD., Shenzhen, Guangdong 518129 (CN)
(72) Inventor: PENG, Wenjie, Shenzhen, Guangdong 518129 (CN)
(74) Representative: Epping - Hermann - Fischer
(86) International application number: PCT/CN2024/116395
(87) International publication number: WO 2025/077484

(57) **Abstract**

A communication method and apparatus are provided. The method includes: A first network element receives a first request message, obtains a measurement result of a first sensing signal, determines a sensing result in signal coverage of the first sensing signal based on the measurement result of the first sensing signal, and sends the sensing result in the signal coverage of the first sensing signal. The first request message is used to request a sensing result of a terminal device at a target point, the first request message includes position information of the target point, and the target point is located in the signal coverage of the first sensing signal.

## Description

This application claims priority to Chinese Patent Application No. 202311304143.7, filed with the China National Intellectual Property Administration on October 8, 2023 and entitled "COMMUNICATION METHOD AND APPARATUS", which is incorporated herein by reference in its entirety.

### TECHNICAL FIELD

Embodiments of this application relate to the communication field, and in particular, to a communication method and apparatus.

### BACKGROUND

An uncrewed aerial system (uncrewed aerial system, UAS) is introduced into the 3rd generation partnership project (3rd generation partnership project, 3GPP) standard to meet communication requirements of uncrewed aerial vehicles (unmanned aerial vehicles, UAVs). In the 3GPP standard, proximity communication (proximity communication, PC5) between different UAVs is supported. The PC5 technology includes two implementations: sidelink (sidelink, SL) broadcast and SL unicast. Therefore, a plurality of UAVs in air operations may notify each other of respective flight information through PC5, to avoid collision between the plurality of UAVs.

However, through the PC5 technology, only the collision between the plurality of UAVs can be avoided, and non-UAV security threats cannot be learned of. Therefore, how to learn security threats existing during air operations of the UAVs is an urgent problem to be resolved.

### SUMMARY

Embodiments of this application provide a communication method and apparatus, to determine a security threat existing in a terminal device.

According to a first aspect, a communication method is provided. The method may be performed by a first network element, or may be performed by a component of the first network element, for example, a processor, a chip, or a chip system of a receiving device, or may be implemented by a logical module or software that can implement all or a part of functions of the receiving device. The method includes: receiving a first request message, where the first request message is used to request a sensing result of a terminal device at a target point, and the first request message includes position information of the target point; obtaining a measurement result of a first sensing signal, where the target point is located within signal coverage of the first sensing signal; determining a sensing result in the signal coverage of the first sensing signal based on the measurement result of the first sensing signal; and sending the sensing result in the signal coverage of the first sensing signal.

Based on this solution, the first network element can learn, based on the position information of the target point, a measurement result (namely, the measurement result of the first sensing signal) obtained by measuring an area (namely, the signal coverage of the first sensing signal) in which the target point is located, and determine a sensing result of the area based on the measurement result, namely, an object existing in the area. In other words, the first network element can learn all objects (for example, an object having a communication function and an object having no communication function) existing in the area. In comparison with a solution in which an object having a PC5 communication function is determined through a PC5 communication technology, more objects can be learned. Therefore, precision of determining a high-altitude environment of the area in which the target point is located can be improved.

In addition, it may be understood that the sensing result can be used to determine a security threat at the target point (for example, determine whether the terminal device has a collision risk at the target point). Therefore, in comparison with determining the security threat at the target point through the PC5 communication technology, the security threat at the target point can be determined based on more objects, thereby improving precision of the determined security threat at the target point (for example, precision of the collision risk).

In a possible design, the first network element may be any one of a network element having a sensing function in a core network, a serving radio access network device of the terminal device, or a central unit CU network element (for ease of description, referred to as a first CU network element for short below) having a part of functions of the serving radio access network device.

In a possible design, receiving the first request message includes: receiving the first request message from a serving radio access network device of the terminal device; or receiving the first request message from an access and mobility management AMF network element; or receiving the first request message from an uncrewed aerial system traffic management UTM network element.

In a possible design, receiving the first request message includes: receiving the first request message from the terminal device; or receiving the first request message from an AMF network element.

According to a second aspect, a communication method is provided. The method may be performed by a fourth network element, or may be performed by a component of the fourth network element, for example, a processor, a chip, or a chip system of a receiving device, or may be implemented by a logical module or software that can implement all or a part of functions of the receiving device. The method includes: receiving a fifth request message, where the fifth request message is used to request whether a terminal device has a collision risk at a target point, and the fifth request message includes position information of the target point; obtaining a sensing result in signal coverage of a first sensing signal, where the target point is located in the signal coverage of the first sensing signal; determining first indication information based on the sensing result in the signal coverage of the first sensing signal, where the first indication information indicates whether the terminal device has a collision risk at the target point; and sending the first indication information.

Based on this solution, the fourth network element can learn, based on the position information of the target point, a sensing result of an area (namely, the signal coverage of the first sensing signal) in which the target point is located, namely, an object existing in the area, and then determine a security threat at the target point based on the sensing result (for example, determine whether the terminal device has a collision risk at the target point). It may be understood that the sensing result of the area in which the target point is located includes a result of sensing all objects existing in the area. In comparison with a solution in which an object having a PC5 communication function is determined through a PC5 communication technology, more objects can be learned. Therefore, the security threat at the target point can be determined based on more objects, thereby improving precision of the determined security threat at the target point (for example, precision of a collision risk).

In a possible design, the fifth request message further includes a first threshold, and the first threshold is used to determine the first indication information.

In a possible design, the fourth network element may be any one of a serving radio access network device of the terminal device and a first CU network element.

In a possible design, obtaining the sensing result in the signal coverage of the first sensing signal includes: sending a first request message to a fifth network element, where the first request message is used to request the sensing result of the terminal device at the target point, the first request message includes the position information of the target point, and the fifth network element is a network element having a sensing function in a core network; receiving the measurement result of the first sensing signal from the fifth network element; and determining the sensing result in the signal coverage of the first sensing signal based on the measurement result of the first sensing signal.

Based on this possible design, the fourth network element can send the first request message to the fifth network element based on the position information of the target point, so that the fifth network element can measure the area in which the target point is located (namely, the signal coverage of the first sensing signal), and obtain the sensing result in the signal coverage of the first sensing signal through sensing, to reduce computational power of the fourth network element. In addition, because the fifth network element is a network element having a sensing function in the core network, compared with the sensing result that is in the signal coverage of the first sensing signal and that is obtained by the fourth network element through measurement and sensing, the sensing result that is in the signal coverage of the first sensing signal and that is determined by the fifth network element is more accurate. This improves precision of the determined security threat at the target point (for example, the precision of the collision risk).

In a possible design, obtaining the sensing result in the signal coverage of the first sensing signal includes: obtaining the measurement result of the first sensing signal; and determining the sensing result in the signal coverage of the first sensing signal based on the measurement result of the first sensing signal.

With reference to the first aspect and the second aspect, in a possible design, the obtaining the measurement result of the first sensing signal includes: sending the first sensing signal; receiving a first echo signal of the first sensing signal; and determining a first measurement result of the first sensing signal based on the first echo signal of the first sensing signal, where the measurement result of the first sensing signal includes the first measurement result of the first sensing signal.

Based on this possible design, the fourth network element/first network element can measure, based on the position information of the target point, the area (namely, the signal coverage of the first sensing signal) in which the target point is located, and obtain the sensing result in the signal coverage of the first sensing signal through sensing. This can avoid interaction between a plurality of devices of the sensing result in the signal coverage of the first sensing signal, and shorten a delay in determining the sensing result in the signal coverage of the first sensing signal. Therefore, efficiency of determining the sensing result in the signal coverage of the first sensing signal can be improved.

With reference to the first aspect and the second aspect, in a possible design, the obtaining the measurement result of the first sensing signal includes: sending a second request message, where the second request message is used to request to measure the first sensing signal, and the second request message includes the position information of the target point; and receiving the measurement result of the first sensing signal.

Based on this possible design, the fourth network element/first network element can send, based on the position information of the target point, the second request message to a device configured to measure the first sensing signal, so that the first measurement result of the first sensing signal can be obtained from the device configured to measure the first sensing signal, to provide a basis for the fourth network element/first network element to determine the sensing result in the signal coverage of the first sensing signal based on the first measurement result of the first sensing signal.

With reference to the first aspect and the second aspect, in a possible design, the measurement result of the first sensing signal includes the first measurement result, and the first measurement result is a measurement result obtained by measuring the signal coverage of the first sensing signal by the device configured to measure the first sensing signal.

With reference to the first aspect and the second aspect, in a possible design, the communication method further includes: sending a third request message, where the third request message is used to request to perform collaborative measurement on the first sensing signal, the third request message includes a configuration parameter of the first sensing signal, and the configuration parameter includes at least one of a message identifier ID, a resource configuration, a frequency domain bandwidth, a time domain periodicity, transmit power, or a signal waveform of the first sensing signal; and receiving a second measurement result of the first sensing signal, where the measurement result of the first sensing signal includes the second measurement result.

Based on this possible design, the fourth network element/first network element can obtain the second measurement result of the first sensing signal from a device configured to perform collaborative measurement on the first sensing signal, so that the fourth network element/first network element determines the sensing result in the signal coverage of the first sensing signal based on the first measurement result and the second measurement result of the first sensing signal, thereby improving precision of determining the sensing result in the signal coverage of the first sensing signal.

With reference to the first aspect and the second aspect, in a possible design, before the sending the third request message, the communication method further includes: receiving at least one of position information or time information of the device configured to measure the first sensing signal, where at least one of the position information or the time information of the device configured to measure the first sensing signal is used to determine the second measurement result, and the third request message indicates at least one of the position information or the time information of the device configured to measure the first sensing signal.

Based on this possible design, the third request message indicates at least one of the position information or the time information of the device configured to measure the first sensing signal, so that the device configured to perform collaborative measurement on the first sensing signal learns either of a sending moment of the first sensing signal and a sending position of the first sensing signal, and the device configured to perform collaborative measurement on the first sensing signal may determine the second measurement result based on either of the sending moment of the first sensing signal and the sending position of the first sensing signal. In comparison with a solution in which the second measurement result is determined based on the configuration parameter of the first sensing signal, accuracy of the second measurement result can be improved.

With reference to the first aspect and the second aspect, in a possible design, the measurement result of the first sensing signal includes feature information respectively corresponding to at least one point, and the feature information includes at least one of position information, a movement direction, and a movement speed; and correspondingly, the sensing result includes feature information respectively corresponding to at least one sensing object.

With reference to the first aspect and the second aspect, in a possible design, the communication method further includes: receiving at least one of position information or time information of the device configured to measure the first sensing signal, where at least one of the position information or the time information of the device configured to measure the first sensing signal is used to determine the sensing result in the signal coverage of the first sensing signal; and sending at least one of the position information or the time information of the device configured to measure the first sensing signal.

With reference to the first aspect and the second aspect, in a possible design, the first request message includes a movement path of the terminal device, and the movement path includes the position information of the target point.

With reference to the first aspect and the second aspect, in a possible design, the first request message further includes second sensing quality of service QoS, the second sensing QoS is related to at least one of a quantity of devices configured to measure the first sensing signal or the configuration parameter of the first sensing signal, and the configuration parameter includes at least one of the message identifier ID, the resource configuration, the frequency domain bandwidth, the time domain periodicity, the transmit power, or the signal waveform for sending the first sensing signal.

Based on this possible design, the fourth network element/first network element can determine, based on the second sensing QoS, the quantity of devices configured to measure the first sensing signal, to meet a precision requirement of the first request message for the sensing result in the signal coverage of the first sensing signal, and/or the fourth network element/first network element can determine the configuration parameter of the first sensing signal based on the second sensing QoS, to obtain the sensing result in the signal coverage of the first sensing signal, thereby meeting a requirement of the first request message for the sensing result of the target point.

According to a third aspect, a communication method is provided. The method may be performed by a device configured to measure a first sensing signal, or may be performed by a component of the device configured to measure the first sensing signal, for example, a processor, a chip, or a chip system of a receiving device, or may be implemented by a logical module or software that can implement all or a part of functions of the receiving device. The method includes: receiving a second request message, where the second request message is used to request to measure the first sensing signal, the second request message includes position information of a terminal device at a target point, and the target point is in signal coverage of the first sensing signal; sending the first sensing signal; receiving a first echo signal of the first sensing signal; determining a first measurement result of the first sensing signal based on the first echo signal of the first sensing signal; and sending the first measurement result of the first sensing signal, where the first measurement result is used to determine a sensing result of the terminal device at the target point.

Based on this solution, the device configured to measure the first sensing signal can determine the first measurement result of the first sensing signal based on the second request message, and respond to the second request message (that is, send the first measurement result of the first sensing signal), so that a first network element or a fourth network element can determine, based on the measurement result, a sensing result of an area (namely, the signal coverage of the first sensing signal) in which the target point is located. It may be understood that the first measurement result of the first sensing signal determined by the device configured to measure the first sensing signal is a measurement result of all objects (for example, an object having a communication function and an object having no communication function) existing in the area. In comparison with a solution in which an object having a PC5 communication function is determined through a PC5 communication technology, more objects can be learned. Therefore, precision of determining a high-altitude environment of the area in which the target point is located can be improved.

In addition, it may be understood that the sensing result can be used to determine a security threat at the target point (for example, determine whether the terminal device has a collision risk at the target point). Therefore, in comparison with determining the security threat at the target point through the PC5 communication technology, the security threat at the target point can be determined based on more objects, thereby improving precision of the determined security threat at the target point (for example, precision of the collision risk).

In a possible design, the device configured to measure the first sensing signal includes any one of a first radio access network device or a first distributed unit DU network element. The first DU network element is a DU network element having another part of functions of the serving radio access network device.

With reference to the first aspect, the second aspect, and the third aspect, in a possible design, the communication method further includes: receiving at least one of position information or time information of the device configured to perform collaborative measurement on the first sensing signal, where at least one of the position information or the time information of the device configured to perform collaborative measurement on the first sensing signal is used to determine the sensing result in the signal coverage of the first sensing signal.

According to a fourth aspect, a communication method is provided. The method may be performed by a second DU network element, or may be performed by a component of the second DU network element, for example, a processor, a chip, or a chip system of a receiving device, or may be implemented by a logical module or software that can implement all or a part of functions of the receiving device. The method includes: receiving a fourth request message, where the fourth request message is used to request to measure the first sensing signal, the fourth request message includes position information of a terminal device at a target point, and the target point is in signal coverage of the first sensing signal; sending the first sensing signal; receiving a first echo signal of the first sensing signal; determining a first measurement result of the first sensing signal based on the first echo signal of the first sensing signal; and sending the first measurement result of the first sensing signal, where the first measurement result is used to determine a sensing result of the terminal device at the target point.

Based on this solution, the second DU network element can determine the first measurement result of the first sensing signal based on the fourth request message, and respond to the fourth request message (that is, send the first measurement result of the first sensing signal), so that a first network element or a fourth network element can determine, based on the measurement result, a sensing result of an area (namely, the signal coverage of the first sensing signal) in which the target point is located. It may be understood that the first measurement result of the first sensing signal determined by the second DU network element is a measurement result of all objects (for example, an object having a communication function and an object having no communication function) existing in the area. In comparison with a solution in which an object having a PC5 communication function is determined through a PC5 communication technology, more objects can be learned. Therefore, precision of determining a high-altitude environment of the area in which the target point is located can be improved.

In addition, it may be understood that the sensing result can be used to determine a security threat at the target point (for example, determine whether the terminal device has a collision risk at the target point). Therefore, in comparison with determining the security threat at the target point through the PC5 communication technology, the security threat at the target point can be determined based on more objects, thereby improving precision of the determined security threat at the target point (for example, precision of the collision risk).

In a possible design, the second DU network element is a DU network element having another part of functions of the first radio access network device.

In a possible design, the communication method further includes: receiving at least one of position information or time information of the second DU network element, where at least one of the position information or the time information of the second DU network element is used to determine the sensing result in the signal coverage of the first sensing signal.

In a possible design, q third request message indicates at least one of the position information or the time information of the second DU network element, and at least one of the position information or the time information of the second DU network element is used to determine a second measurement result.

With reference to the third aspect and the fourth aspect, in a possible design, sending the first measurement result of the first sensing signal includes: sending a measurement result of the first sensing signal, where the measurement result of the first sensing signal includes the first measurement result and the second measurement result.

With reference to the third aspect and the fourth aspect, in a possible design, before sending the first sensing signal, the communication method further includes: sending a configuration parameter of the first sensing signal.

With reference to the third aspect and the fourth aspect, in a possible design, the first measurement result includes the feature information respectively corresponding to the at least one point, and the feature information includes at least one of the position information, the movement direction, and the movement speed.

According to a fifth aspect, a communication method is provided. The method may be performed by a device configured to perform collaborative measurement on a first sensing signal, or may be performed by a component of the device configured to perform collaborative measurement on the first sensing signal, for example, a processor, a chip, or a chip system of a receiving device, or may be implemented by a logical module or software that can implement all or a part of functions of the receiving device. The method includes: receiving a third request message, where the third request message is used to request to perform collaborative measurement on the first sensing signal, the third request message includes a configuration parameter of the first sensing signal, and the configuration parameter includes at least one of a message identifier ID, a resource configuration, a frequency domain bandwidth, a time domain periodicity, transmit power, or a signal waveform of the first sensing signal; receiving a second echo signal of the first sensing signal; determining a second measurement result of the first sensing signal based on the second echo signal of the first sensing signal; and sending the second measurement result, where the second measurement result is used to determine a sensing result of a terminal device at a target point, and the target point is located within signal coverage of the first sensing signal.

Based on this solution, the device configured to perform collaborative measurement on the first sensing signal can determine the second measurement result of the first sensing signal based on the third request message, so that the fourth network element/first network element can determine the sensing result in the signal coverage of the first sensing signal based on the second measurement result, and respond to the third request message (that is, send the second measurement result of the first sensing signal). In this way, the first network element or the fourth network element can determine, based on the measurement result, a sensing result of an area (namely, the signal coverage of the first sensing signal) in which the target point is located. It may be understood that the second measurement result of the first sensing signal determined by the device configured to measure the first sensing signal is a measurement result of all objects (for example, an object having a communication function and an object having no communication function) existing in the area. In comparison with a solution in which an object having a PC5 communication function is determined through a PC5 communication technology, more objects can be learned. Therefore, precision of determining a high-altitude environment of the area in which the target point is located can be improved.

With reference to the third aspect, the fourth aspect, and the fifth aspect, in a possible design, the second measurement result includes feature information respectively corresponding to at least one point, the feature information includes at least one of position information, a movement direction, and a movement speed, and the second measurement result is a measurement result that is of the first sensing signal and that is obtained through measurement by the device that performs collaborative measurement on the first sensing signal.

According to a sixth aspect, a communication method is provided. The method may be performed by a first CU network element, or may be performed by a component of the first CU network element, for example, a processor, a chip, or a chip system of a receiving device, or may be implemented by a logical module or software that can implement all or a part of functions of the receiving device. The method includes: receiving a second request message, where the second request message is used to request to measure a first sensing signal, the second request message includes position information of a terminal device at a target point, and the target point is in signal coverage of the first sensing signal; sending a fourth request message, where the fourth request message is used to request to measure the first sensing signal, and the second request message includes the position information of the target point; receiving a first measurement result of the first sensing signal; and sending the first measurement result, where the first measurement result is used to determine a sensing result of the terminal device at the target point.

Based on this solution, the first CU network element requests, based on the second request message, the first measurement result of the first sensing signal from a device configured to measure the first sensing signal (that is, sends the fourth request message), to obtain the first measurement result of the first sensing signal, and respond to the second request message.

With reference to the fourth aspect and the sixth aspect, in a possible design, the fourth request message further includes at least one of a configuration parameter of the first sensing signal, second sensing duration, and third sensing QoS, the configuration parameter includes at least one of a message identifier ID, a resource configuration, a frequency domain bandwidth, a time domain periodicity, transmit power, or a signal waveform of the first sensing signal, the second sensing duration is duration from a moment at which the fourth request message is received to a moment at which the measurement result of the first sensing signal is sent, and the third sensing QoS is related to at least one of a quantity of devices configured to measure the first sensing signal or the configuration parameter of the first sensing signal.

In a possible design, the measurement result of the first sensing signal includes feature information respectively corresponding to at least one point, and the feature information includes at least one of position information, a movement direction, and a movement speed.

In a possible design, the communication method further includes: receiving at least one of time information or position information of a device configured to perform collaborative measurement on the first sensing signal, where at least one of the time information or the position information of the device configured to perform collaborative measurement on the first sensing signal is used to determine a sensing result in the signal coverage of the first sensing signal; and sending at least one of the time information or the position information of the device configured to perform collaborative measurement on the first sensing signal.

With reference to the foregoing six aspects, in a possible design, the communication method further includes: sending at least one of the time information or the position information of the device configured to measure the first sensing signal, where at least one of the time information or the position information of the device configured to measure the first sensing signal is used to determine the sensing result in the signal coverage of the first sensing signal.

With reference to the third aspect, the fourth aspect, and the sixth aspect, in a possible design, the communication method further includes: sending the third request message, where the third request message is used to request to perform collaborative measurement on the first sensing signal, the third request message includes the configuration parameter of the first sensing signal, and the configuration parameter includes at least one of the message identifier ID, the resource configuration, the frequency domain bandwidth, the time domain periodicity, the transmit power, or the signal waveform of the first sensing signal; and receiving the second measurement result of the first sensing signal, where the second measurement result is used to determine the sensing result of the terminal device at the target point.

With reference to the first aspect, the second aspect, and the sixth aspect, in a possible design, the communication method further includes: before the sending the third request message, the communication method further includes: receiving the configuration parameter of the first sensing signal.

Based on this possible design, after receiving the configuration parameter of the first sensing signal, the fourth network element/first network element may send the third request message to the device configured to perform collaborative measurement on the first sensing signal, so that the device configured to perform collaborative measurement on the first sensing signal can measure the first sensing signal. In comparison with determining the configuration parameter of the first sensing signal by the fourth network element/first network element, computational power of the fourth network element/first network element can be reduced.

With reference to the foregoing six aspects, in a possible design, the third request message indicates at least one of the position information or the time information of the device configured to measure the first sensing signal, and at least one of the position information or the time information of the device configured to measure the first sensing signal is used to determine the second measurement result. With reference to the first aspect, the second aspect, the third aspect, the fourth aspect, and the sixth aspect, in a possible design, the second request message further includes at least one of the configuration parameter, first sensing duration, and first sensing QoS of the first sensing signal, the configuration parameter includes at least one of the message ID, the resource configuration, the frequency domain bandwidth, the time domain periodicity, power, or the signal waveform of the first sensing signal, the first sensing duration is duration from a moment at which the second request message is received to a moment at which the measurement result of the first sensing signal is sent, and the first sensing QoS is related to at least one of the quantity of devices configured to perform collaborative measurement on the first sensing signal or the configuration parameter of the first sensing signal.

With reference to the first aspect, the second aspect, the third aspect, the fourth aspect, and the sixth aspect, in a possible design, sending the first measurement result includes: sending the measurement result of the first sensing signal, where the measurement result of the first sensing signal includes the first measurement result and the second measurement result.

With reference to the first aspect, the second aspect, the third aspect, the fourth aspect, and the sixth aspect, in a possible design, the measurement result of the first sensing signal is a measurement result obtained by performing fitting on the first measurement result and the second measurement result.

According to a seventh aspect, a communication apparatus is provided to implement various methods. The communication apparatus may be the first network element in the first aspect, or an apparatus included in the first network element, for example, a chip or a chip system; or the communication apparatus may be the fourth network element in the second aspect, or an apparatus included in the fourth network element, for example, a chip or a chip system; or the communication apparatus may be the device configured to measure the first sensing signal in the third aspect, or an apparatus included in the device configured to measure the first sensing signal, for example, a chip or a chip system; or the communication apparatus may be the second DU network element in the fourth aspect, or an apparatus included in the second DU network element, for example, a chip or a chip system; or the communication apparatus may be the device configured to perform collaborative measurement on the first sensing signal in the fifth aspect, or an apparatus included in the device configured to perform collaborative measurement on the first sensing signal, for example, a chip or a chip system; or the communication apparatus may be the first CU network element in the sixth aspect, or an apparatus included in the first CU network element, for example, a chip or a chip system. The communication apparatus includes corresponding modules, units, or means (means) for implementing the methods. The modules, units, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and the possible implementations of the foregoing aspects. The transceiver module may include a receiving module and a sending module that are respectively configured to implement a receiving function and a sending function in any one of the foregoing aspects or the possible implementations of the foregoing aspects.

In some possible designs, the transceiver module may include a transceiver circuit, a transceiver machine, a transceiver, or a communication interface.

According to an eighth aspect, a communication apparatus is provided, and includes a processor and a memory. The memory is configured to store computer instructions, and when the processor executes the instructions, the communication apparatus is enabled to perform the method according to any one of the aspects. The communication apparatus may be the first network element in the first aspect, or an apparatus included in the first network element, for example, a chip or a chip system; or the communication apparatus may be the fourth network element in the second aspect, or an apparatus included in the fourth network element, for example, a chip or a chip system; or the communication apparatus may be the device configured to measure the first sensing signal in the third aspect, or an apparatus included in the device configured to measure the first sensing signal, for example, a chip or a chip system; or the communication apparatus may be the second DU network element in the fourth aspect, or an apparatus included in the second DU network element, for example, a chip or a chip system; or the communication apparatus may be the device configured to perform collaborative measurement on the first sensing signal in the fifth aspect, or an apparatus included in the device configured to perform collaborative measurement on the first sensing signal, for example, a chip or a chip system; or the communication apparatus may be the first CU network element in the sixth aspect, or an apparatus included in the first CU network element, for example, a chip or a chip system.

According to a ninth aspect, a communication apparatus is provided, and includes a processor and a communication interface. The communication interface is configured to communicate with a module outside the communication apparatus, and the processor is configured to execute a computer program or instructions, so that the communication apparatus performs the method according to any one of the aspects. The communication apparatus may be the first network element in the first aspect, or an apparatus included in the first network element, for example, a chip or a chip system; or the communication apparatus may be the fourth network element in the second aspect, or an apparatus included in the fourth network element, for example, a chip or a chip system; or the communication apparatus may be the device configured to measure the first sensing signal in the third aspect, or an apparatus included in the device configured to measure the first sensing signal, for example, a chip or a chip system; or the communication apparatus may be the second DU network element in the fourth aspect, or an apparatus included in the second DU network element, for example, a chip or a chip system; or the communication apparatus may be the device configured to perform collaborative measurement on the first sensing signal in the fifth aspect, or an apparatus included in the device configured to perform collaborative measurement on the first sensing signal, for example, a chip or a chip system; or the communication apparatus may be the first CU network element in the sixth aspect, or an apparatus included in the first CU network element, for example, a chip or a chip system.

According to a tenth aspect, a communication apparatus is provided, and includes at least one processor. The processor is configured to execute a computer program or instructions stored in a memory, to enable the communication apparatus to perform the method according to any one of the aspects. The memory may be coupled to the processor, or may be independent of the processor. The communication apparatus may be the first network element in the first aspect, or an apparatus included in the first network element, for example, a chip or a chip system; or the communication apparatus may be the fourth network element in the second aspect, or an apparatus included in the fourth network element, for example, a chip or a chip system; or the communication apparatus may be the device configured to measure the first sensing signal in the third aspect, or an apparatus included in the device configured to measure the first sensing signal, for example, a chip or a chip system; or the communication apparatus may be the second DU network element in the fourth aspect, or an apparatus included in the second DU network element, for example, a chip or a chip system; or the communication apparatus may be the device configured to perform collaborative measurement on the first sensing signal in the fifth aspect, or an apparatus included in the device configured to perform collaborative measurement on the first sensing signal, for example, a chip or a chip system; or the communication apparatus may be the first CU network element in the sixth aspect, or an apparatus included in the first CU network element, for example, a chip or a chip system. In some possible designs, the communication apparatus includes a memory, and the memory is configured to store necessary program instructions and data.

In some possible designs, when the apparatus is a chip system, the apparatus may include a chip, or may include a chip and another discrete device.

It may be understood that when the communication apparatus provided in any one of the seventh aspect to the tenth aspect is a chip, a sending action/function of the communication apparatus may be understood as outputting information, and a receiving action/function of the communication apparatus may be understood as inputting information.

According to an eleventh aspect, a computer-readable storage medium is provided. The computer-readable storage medium stores a computer program or instructions. When the computer program or the instructions are run on a communication apparatus, the communication apparatus is enabled to perform the method according to any one of the aspects.

According to a twelfth aspect, a computer program product including instructions is provided. When the computer program product runs on a communication apparatus, the communication apparatus is enabled to perform the method according to any one of the aspects.

For technical effect brought by any design manner in the seventh aspect to the twelfth aspect, refer to technical effect brought by different design manners in the foregoing six aspects. Details are not described herein again.

### BRIEF DESCRIPTION OF DRAWINGS

FIG. 1 is a diagram of an architecture of a CU-DU architecture-based communication system to which an embodiment is applied;
FIG. 2 is a diagram of a system logical framework of an uncrewed aerial vehicle UAV device to which an embodiment of this application is applied;
FIG. 3 is a diagram of communication between a plurality of UAV devices according to an embodiment of this application;
FIG. 4 is a diagram of an architecture of a communication system to which an embodiment of this application is applied;
FIG. 5A to FIG. 5D are diagrams of architectures of other communication systems to which an embodiment of this application is applied;
FIG. 6 is a schematic flowchart of a communication method to which an embodiment of this application is applied;
FIG. 7 is a diagram of a measurement result to which an embodiment of this application is applied;
FIG. 8 is a schematic flowchart of another communication method to which an embodiment of this application is applied;
FIG. 9 is a schematic flowchart of another communication method to which an embodiment of this application is applied;
FIG. 10 is a schematic flowchart of another communication method to which an embodiment of this application is applied;
FIG. 11 is a schematic flowchart of another communication method to which an embodiment of this application is applied;
FIG. 12 is a schematic flowchart of another communication method to which an embodiment of this application is applied;
FIG. 13 is a schematic flowchart of another communication method to which an embodiment of this application is applied;
FIG. 14 is a schematic flowchart of another communication method to which an embodiment of this application is applied;
FIG. 15A and FIG. 15B are a schematic flowchart of another communication method to which an embodiment of this application is applied;
FIG. 16A and FIG. 16B are a schematic flowchart of another communication method to which an embodiment of this application is applied;
FIG. 17 is a schematic flowchart of another communication method to which an embodiment of this application is applied;
FIG. 18 is a schematic flowchart of another communication method to which an embodiment of this application is applied;
FIG. 19 is a schematic flowchart of another communication method to which an embodiment of this application is applied;
FIG. 20A and FIG. 20B are a schematic flowchart of another communication method to which an embodiment of this application is applied;
FIG. 21 is a schematic flowchart of another communication method to which an embodiment of this application is applied;
FIG. 22 is a schematic flowchart of another communication method to which an embodiment of this application is applied;
FIG. 23 is a schematic flowchart of another communication method to which an embodiment of this application is applied;
FIG. 24 is a schematic flowchart of another communication method to which an embodiment of this application is applied;
FIG. 25 is a schematic flowchart of another communication method to which an embodiment of this application is applied;
FIG. 26A and FIG. 26B are a schematic flowchart of another communication method to which an embodiment of this application is applied;
FIG. 27 is a schematic flowchart of another communication method to which an embodiment of this application is applied;
FIG. 28 is a diagram of a structure of a communication apparatus according to this application;
FIG. 29 is a diagram of a structure of another communication apparatus according to this application; and
FIG. 30 is a diagram of a structure of another communication apparatus according to this application.

### DESCRIPTION OF EMBODIMENTS

In descriptions of this application, "/" represents an "or" relationship between associated objects unless otherwise specified. For example, A/B may represent A or B. "And/or" in this application represents only an association relationship between associated objects and represents that three relationships may exist. For example, A and/or B may represent the following three cases: Only A exists, both A and B exist, and only B exists, where A and B may be singular or plural.

In the descriptions of this application, "a plurality of" means two or more than two unless otherwise specified. "At least one item (piece) of the following" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the words such as "first" and "second" do not limit a quantity or an execution sequence, and the words such as "first" and "second" do not indicate a definite difference.

In embodiments of this application, words such as "example" or "for example" are used to represent giving an example, an illustration, or a description. Any embodiment or design scheme described as "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" mentioned throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features may be combined with other features based on a requirement. Correspondingly, the apparatus provided in embodiments of this application may also correspondingly implement these features or functions. Details are not described herein.

In this application, for same or similar parts of embodiments, mutual reference may be made between the embodiments, unless otherwise specified. In embodiments of this application and the implementations/methods/implementation methods in embodiments, unless otherwise specified or a logical collision occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship of the technical features. The following implementations of this application are not intended to limit the protection scope of this application.

For ease of understanding of the technical solutions in embodiments of this application, the following first briefly describes technologies related to this application.

### 1. Central unit (central unit, CU) and distributed unit (distributed unit, DU) architectures

In a 5th generation (5th generation, 5G) system, a base station may include two implementations: (1) a centralized form, where all protocol stacks are centralized on one device; and (2) a distributed form, where at least one CU and at least one DU implement all functions of the base station.

The CU and the DU may be separately disposed, or may be included in a same network element (for example, a baseband unit (baseband unit, BBU)). A CU node and a DU node separate protocol layers of the base station, functions of a part of the protocol layers are deployed on the CU, and functions of a part or all of the remaining protocol layers are distributed on the DU. The CU is configured to manage the DU.

In some embodiments, the CU and the DU may be obtained through division based on protocol layers of a wireless network. For example, functions of a packet data convergence protocol (packet data convergence protocol, PDCP) layer and protocol layers (for example, a radio resource control (radio resource control, RRC) layer and a service data adaptation protocol (service data adaptation protocol, SDAP) layer) above the PDCP layer are deployed on the CU, and functions of a protocol layer (for example, a radio link control (radio link control, RLC) layer, a media access control (media access control, MAC) layer, or a physical (physical, PHY) layer) below the PDCP layer are deployed on the DU. For another example, functions of a protocol layer above the PDCP layer are deployed on the CU, and functions of the PDCP layer and a protocol layer below the PDCP layer are deployed on the DU. This is not limited.

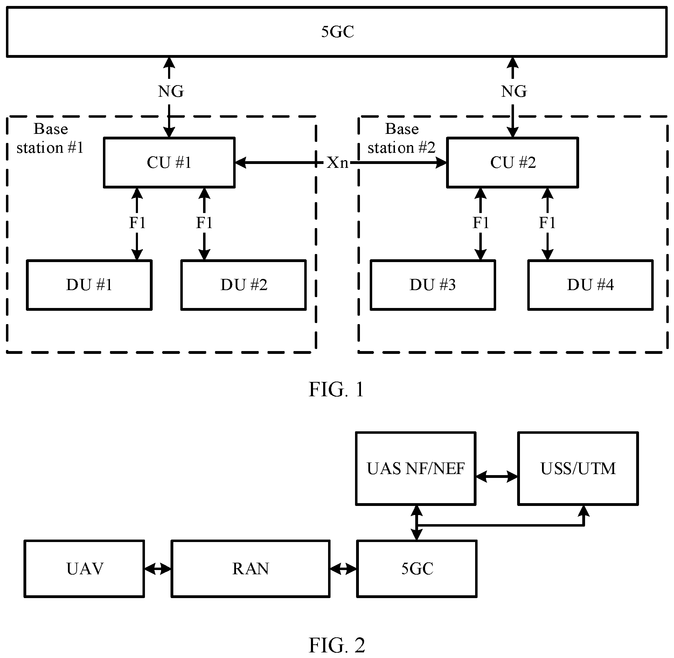

For example, as shown in FIG. 1, the base station may include a CU and two DUs. A base station #1 includes a CU #1, a DU #1, and a DU #2, and a base station #2 includes a CU #2, a DU #3, and a DU #4. The CU is connected to the DU through an F1 interface, the CU is connected to a 5th generation (5th generation, 5G) core (core) network (5GC for short) through an NG interface, and CUs are connected to each other through an Xn interface.

### 2. Wireless sensing technology

The wireless sensing technology refers to obtaining information such as existence information and positioning information of a target by using a radio signal. The wireless sensing technology may include a terminal device-based sensing (device-based sensing) technology and a terminal device-free sensing (device-free sensing) technology.

The terminal device-based sensing technology may be applied to a cellular network. In this case, the technology may be referred to as a cellular positioning technology. To be specific, through interaction between a base station and a terminal device, the base station side obtains round-trip time information or angle information of uplink and downlink signals, so that a position of the terminal device can be obtained by performing calculation on a measurement signal on a core network side or an edge side.

The terminal device-free sensing technology originates from a radar technology. With development of radar and communication technologies, signal processing and hardware design are converged. Based on this, an integrated communication and sensing (also referred to as converged communication and sensing) technology is proposed. Through means such as joint signal design and/or hardware sharing, communication and sensing functions are designed in a unified manner, to obtain gains in spectrum sharing, cost reduction, and simplified deployment. Based on the integrated communication and sensing technology, a radio signal may be transmitted to an object through a transmitter, to sense the object. Specifically, because the object has an area in which a signal may be reflected, a receiver may receive a reflected radio signal and analyze the signal, to obtain a sensing measurement result of the object, for example, an angle or a delay. In the cellular network, wireless base station communication technologies, evolving towards multi-antenna, multi-input multi-output (multi-input multi-output, MIMO), and large-scale arrays, are converging with radar technologies, and feature extensive deployment, abundant spectrum resources, and the like, so that the wireless base station communication technologies can be used to implement object position sensing and are applicable to scenario such as UAV supervision and high-speed railway perimeter intrusion detection.

### 3. UAV communication technology

A system logical framework of a UAV device is introduced into the 3GPP standard, to provide a communication service for the UAV device. For example, the system logical framework includes content shown in FIG. 2. As shown in FIG. 2, a UAV may access a core network (for example, a 5GC) through a radio access network (radio access network, RAN) device, and an uncrewed aerial system service supplier (uncrewed aerial system service supplier, USS) (or a unified threat management (unified threat management, UTM) network element) may access the 5GC through a network exposure function (network exposure function, NEF) entity or an uncrewed aerial system network function (uncrewed aerial system network function, UAS-NF) network element deployed in an NEF entity. Therefore, in a process of serving the UAV, the USS may obtain, through the 5GC, a service required by the UAV, to support a UAV-related service. Services that can be obtained by the USS through the 5GC include but are not limited to positioning, authentication, and online status monitoring.

For example, the UAV may access an access and mobility management function (access and mobility management function, AMF) network element in a core network through the RAN device. Further, the UAV communicates with another network element in the core network through the AMF network element. The AMF network element is mainly responsible for mobility management in a mobile network, such as user position update, user network registration, and user switching.

### 4. PC5 communication technology

The PC5 communication technology is a technology for direct communication between devices, and implements short-range communication based on a wireless local area network (wireless local area network, WLAN), Bluetooth, or the like. In the 3GPP standard protocol, PC5 communication may be performed between UAVs.

The PC5 communication performed by the UAV mainly includes two communication modes: SL broadcast and SL unicast. The SL broadcast means that a UAV broadcasts information to another UAV nearby, and the SL unicast means that a UAV sends information to another specific UAV nearby.

Optionally, the UAV may learn of other UAVs present in its vicinity by performing PC5 communication the nearby UAVs.

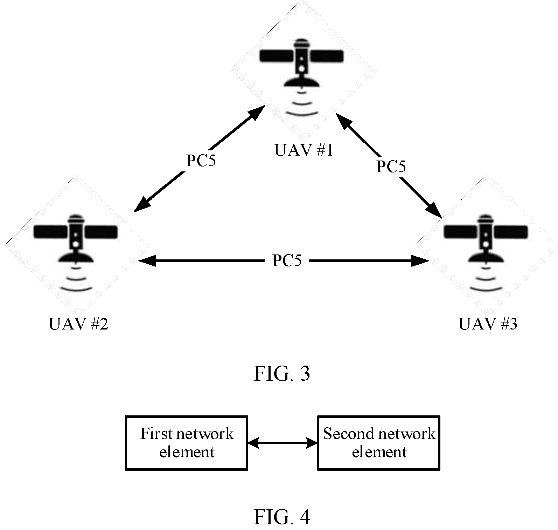

For example, as shown in FIG. 3, a UAV #1 to a UAV #3 may communicate with each other. For example, the UAV #1 may separately receive information from the UAV #2 and the UAV #3. The information may include information such as an identifier (identifier, ID) of the UAV, a flight plan, a flight speed, a position, and a flight direction. Therefore, the UAV #1 may implement collision monitoring on the UAV #1 in a flight process based on the information and information about the UAV #1, that is, determine whether there are risks of colliding with other UAVs in the flight process. Further, the UAV #1 may further re-plan a flight route based on collision risks, to avoid the UAV #2 and the UAV #3, thereby avoiding collision with the UAV #2 and/or the UAV #3.

For example, the flight plan may include a flight point list, and the flight point list indicates a flight path. The flight point list includes a plurality of pieces of position information and a plurality of pieces of time information, and the time information is in a one-to-one correspondence with the position information. For example, time information #1 corresponds to position information #1, and information about the UAV #3 includes the time information #1 and the position information #1, indicating that the UAV #3 plans to fly to a position indicated by the position information #1 at a moment indicated by the time information #1.

In a process of working at heights, the UAV is threatened not only by existence of another UAV, but also by existence of an object (for example, any object and building that can move at heights, like an airplane, a kite, or a bird) other than the another UAV. However, these objects may not be capable of supporting the PC5 communication technology, and even some objects do not have a communication function. Therefore, based on a solution shown in FIG. 3, only collision between a plurality of UAVs can be avoided, and a non-UAV security threat (for example, a security threat of any object that can move at heights, like an airplane, a kite, or a bird) cannot be learned. Therefore, how to learn a security threat existing in an air operation process of the UAV is an urgent problem to be resolved.

In view of this, embodiments of this application provide a communication method, where a first network element can learn, based on position information of a target point, a measurement result (namely, a measurement result of a first sensing signal) obtained by measuring an area (namely, signal coverage of the first sensing signal) in which the target point is located, and determine a sensing result of the area based on the measurement result, namely, an object existing in the area. In other words, the first network element can learn all objects existing in the area. In comparison with a solution in which an object existing in the area is determined through a PC5 communication technology, more objects can be learned. Therefore, precision of determining a high-altitude environment of the area in which the target point is located can be improved.

In addition, it may be understood that the sensing result can be used to determine a security threat at the target point (for example, determine whether a terminal device has a collision risk at the target point). Therefore, in comparison with determining the security threat at the target point through the PC5 communication technology, the security threat at the target point can be determined based on more objects, thereby improving precision of the determined security threat at the target point (for example, precision of the collision risk).

The technical solutions provided in this application may be applied to various communication systems. The communication system may be a 3GPP communication system, for example, a 4th generation (4th generation, 4G) long term evolution (long term evolution, LTE) system, a 5G new radio (new radio, NR) system, a future wireless communication system (for example, a 6th generation mobile communication system (6th generation mobile network, 6G)), a vehicle to everything (vehicle to everything, V2X) system, an LTE-NR hybrid networking system, a device-to-device (device-to-device, D2D) system, a machine-to-machine (machine-to-machine, M2M) communication system, the internet of things (Internet of Things, IoT), another next-generation communication system, or the like. Alternatively, the communication system may be a non-3GPP communication system. This is not limited.

The foregoing communication systems applicable to this application are merely examples for description, and communication systems applicable to this application are not limited thereto. This is uniformly described herein. Details are not described below again.

The following uses FIG. 4 as an example to describe the communication system provided in embodiments of this application. As shown in FIG. 4, the communication system may include at least one first network element and at least one second network element.

In some embodiments, the first network element in this application is a network element having a sensing function in a core network. Correspondingly, the second network element is a serving radio access network device of a terminal device.

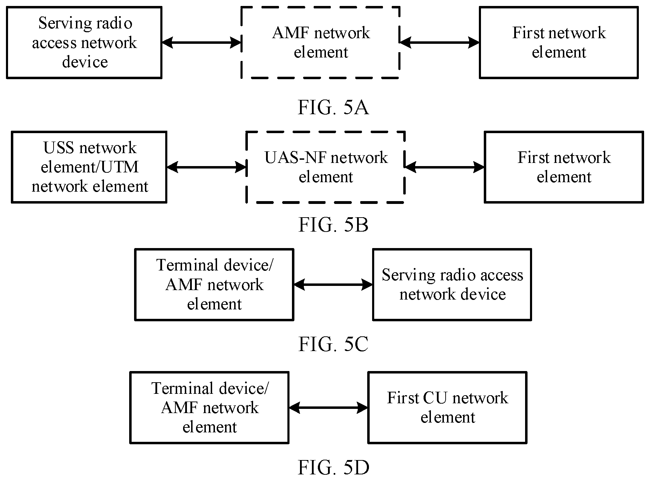

Optionally, in an embodiment, as shown in FIG. 5A, the communication system may further include an AMF network element. The serving radio access network device can communicate with the AMF network element, and the AMF network element can communicate with the first network element. In other words, the serving radio access network device may communicate with the first network element through the AMF network element.

For example, the radio access network device in embodiments of this application has an integrated communication and sensing (also referred to as converged communication and sensing) function.

For example, the terminal device in embodiments of this application may be a UAV.

In some other embodiments, the first network element in this application is a network element having a sensing function in a core network. Correspondingly, the second network element is either of a USS network element/a UTM network element.

Optionally, in an embodiment, as shown in FIG. 5B, the USS network element/UTM network element can directly communicate with the first network element. Alternatively, the communication system may further include a UAS-NF network element. The USS network element/UTM network element can communicate with the UAS-NF network element, and the UAS-NF network element can communicate with the first network element. In other words, the USS network element/UTM network element may communicate with the first network element through the UAS-NF network element.

In some other embodiments, as shown in FIG. 5C, the first network element in this application is a serving radio access network device. Correspondingly, the second network element is either of a terminal device and an AMF network element.

In some other embodiments, as shown in FIG. 5D, the first network element in this application is a first CU network element, and the first CU network element is a CU network element having a part of functions of a serving radio access network device. Correspondingly, the second network element is either of a terminal device and an AMF network element. Further, in an embodiment, the communication system may further include a first DU network element. The first DU network element is a DU network element having another part of functions of the serving radio access network device.

Optionally, in embodiments of this application, the radio access network device is a device for connecting the terminal device to a wireless network, and may be an evolved NodeB (evolved NodeB, eNB or eNodeB) in an LTE or LTE-advanced (LTE-Advanced, LTE-A) system, for example, a conventional macro base station eNB and a micro base station eNB in a heterogeneous network scenario; or may be a next generation NodeB (next generation NodeB, gNodeB or gNB) in a 5G system; or may be a next generation base station in a 6th generation (6th generation, 6G) system; or may be a transmission reception point (transmission reception point, TRP); or may be a base station in a future evolved public land mobile network (public land mobile network, PLMN); or may be a broadband network gateway (broadband network gateway, BNG), an aggregation switch, or a non-3GPP access device; or may be a radio controller in a cloud radio access network (cloud radio access network, CRAN); or may be an access node (access point, AP) in a Wi-Fi system; or may be a radio relay node or a radio backhaul node; or may be a device for implementing a base station function in IoT, a device for implementing a base station function in V2X, a device for implementing a base station function in D2D, or a device for implementing a base station function in M2M. This is not specifically limited in embodiments of this application.

In some possible scenarios, the radio access network device may alternatively be a module or unit that can implement a part of functions of the base station. For example, the radio access network device may be a CU, a DU, a CU-control plane (control plane, CP), a CU-user plane (user plane, UP), or a radio unit (radio unit, RU). As described above, the CU and the DU may be separately disposed, or may be included in a same network element, for example, a BBU. The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, the radio access network device may be a network device in an open radio access network (open RAN, ORAN) system or a module of the network device. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

For example, the base station in embodiments of this application may include base stations in various forms, for example, a macro base station, a micro base station (also referred to as a small cell), an indoor base station, a relay station, an access point, and a donor node. This is not specifically limited in embodiments of this application.

Optionally, in embodiments of this application, the terminal device may be a user side device having a wireless transceiver function, and may send a signal to the radio access network device, or receive a signal from the radio access network device. The terminal device may also be referred to as user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal may be widely used in various scenarios, for example, may be a wireless terminal in IoT, V2X, D2D, M2M, MTC, a 5G network, or a future evolved PLMN. The terminal device may be deployed on land, including being deployed indoors or outdoors, or in a handheld manner or a vehicle-mounted manner; or may be deployed on water (for example, on a ship); or may be deployed in the air (for example, on an airplane, a balloon, or a satellite).

For example, the terminal device may be an uncrewed aerial vehicle, a helicopter, a mechanical arm, an IoT device (for example, a sensor, an electricity meter, or a water meter), a V2X device, a station (station, ST) in a wireless local area network (wireless local area network, WLAN), a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device, another processing device connected to a wireless modem, a vehicle-mounted device, a wearable device (which may also be referred to as a wearable smart device), a tablet computer or a computer having a wireless transceiver function, an XR terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wireless device in a smart home control system (smart home control system, SCS), a wireless device in a smart office (office automation, OA), a vehicle-mounted terminal, a vehicle having a vehicle-to-vehicle (vehicle-to-vehicle, V2V) communication capability, an intelligent connected vehicle, or an uncrewed aerial vehicle having an uncrewed aerial vehicle to uncrewed aerial vehicle (UAV to UAV, U2U) communication capability. The terminal may be mobile or fixed. This is not specifically limited in this application.

In embodiments of this application, the function of the radio access network device may alternatively be performed by a module (for example, a chip) in the radio access network device, or may alternatively be performed by a control subsystem including the function of the radio access network device. The control subsystem including the function of the radio access network device may be a control center in the foregoing application scenarios, such as the smart grid, the industrial control, the smart transportation, and the smart city. The function of the terminal device may also be performed by a module (for example, a chip or a modem) in the radio access network device, or may be performed by an apparatus including the function of the radio access network device.

With reference to the accompanying drawings, the following describes in detail the communication method provided in embodiments of this application by using the communication systems shown in FIG. 4 and FIG. 5A to FIG. 5D as an example. It may be understood that in embodiments of this application, the radio access network device may perform some or all steps in embodiments of this application. These steps or operations are merely examples. In embodiments of this application, other operations or variations of various operations may be further performed. In addition, the steps may be performed in a sequence different from that presented in embodiments of this application, and not all of the operations in embodiments of this application may be necessarily performed.

It should be noted that, in the following embodiments of this application, names of messages between devices, names of parameters in the messages, or the like are merely examples, and may be other names during specific implementation. This is not specifically limited in embodiments of this application.

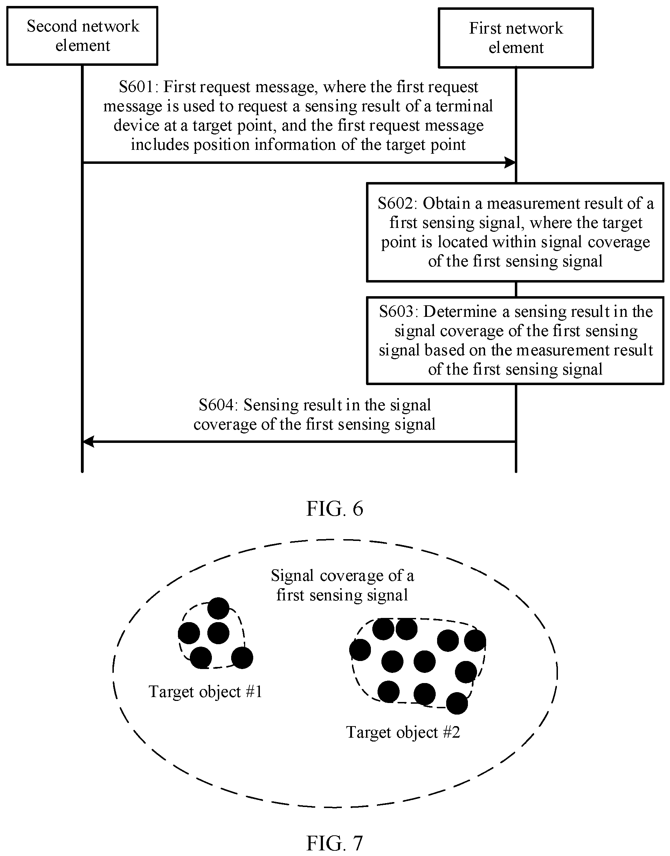

FIG. 6 is a flowchart of a communication method according to an embodiment of this application. As shown in FIG. 6, the communication method may include the following steps.

S601: A second network element sends a first request message to a first network element. Correspondingly, the first network element receives the first request message from the second network element. The first request message is used to request a sensing result of a terminal device at a target point, and the first request message includes position information of the target point.

Optionally, a moment at which the terminal device is located at the target point is later than a moment at which the terminal device is located at a current position. In other words, the first network element may predict the sensing result of the terminal device at the target point based on the first request message.

Optionally, the first request message includes a movement path of the terminal device, and the movement path includes the position information of the target point. For example, the movement path of the terminal device may be represented by a flight point list. For example, the first request message may include information about a part or all of points (namely position information and time information of the points) in the flight point list.

S602: The first network element obtains a measurement result of a first sensing signal, where the target point is located within signal coverage of the first sensing signal.

In an example, the measurement result of the first sensing signal includes feature information respectively corresponding to at least one point. The feature information of the point includes at least one of position information, a movement direction, and a movement speed.

Optionally, in this example, each point in the at least one point is located in the signal coverage of the first sensing signal.

In another example, the measurement result of the first sensing signal includes feature information respectively corresponding to at least one target object. The feature information of the target object is determined based on the feature information respectively corresponding to the at least one point.

Optionally, each target object in the at least one target object is located in the signal coverage of the first sensing signal.

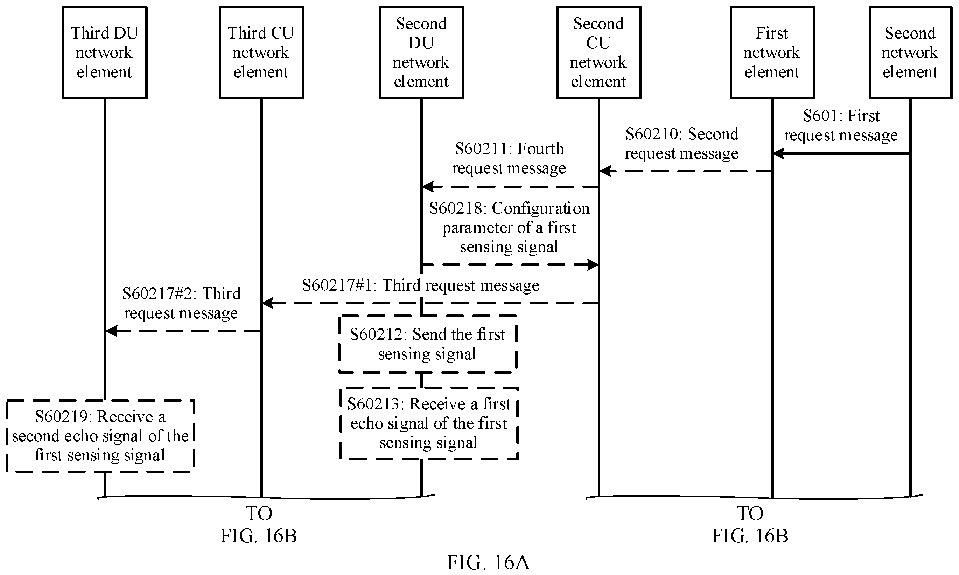

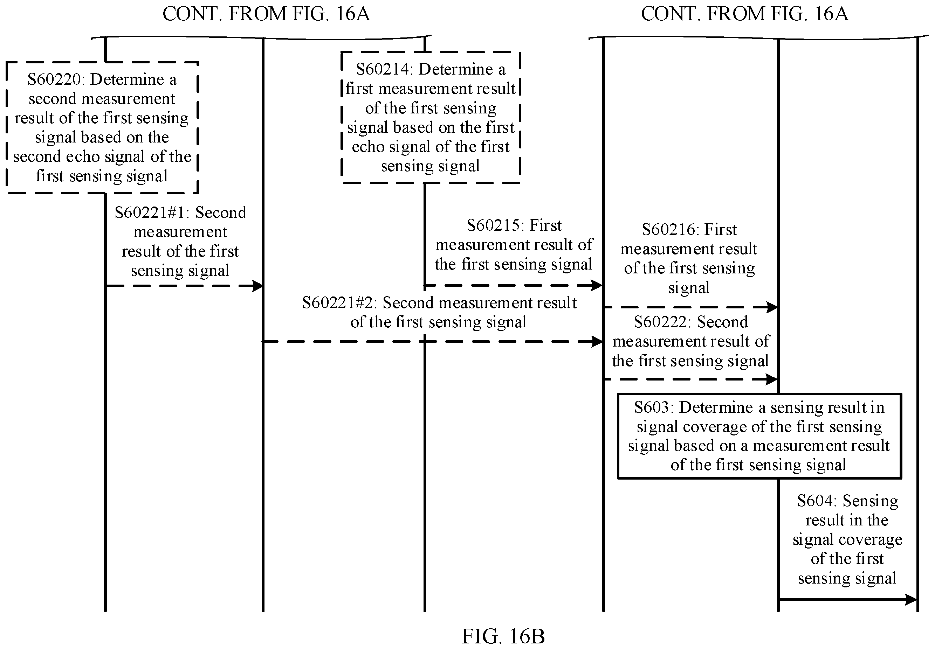

Herein, 16 points are used as an example. As shown in FIG. 7, 16 black dots in FIG. 7 each represent one point. It can be learned from position information of the points that the 16 points correspond to two target objects (namely, a target object #1 and a target object #2).

Optionally, the feature information of the target object includes at least one of position information, movement information, speed information, a size of the target object, and a shape of the target object. The movement information of the target object is movement information of at least one point corresponding to the target object, and the speed information of the target object is speed information of the at least one point corresponding to the target object. The at least one point corresponding to the target object corresponds to the same movement information, and the at least one point corresponding to the target object corresponds to the same speed information.

In another example, the measurement result of the first sensing signal includes feature information of an echo signal of the first sensing signal. A feature information of the echo signal includes at least one of signal strength, a phase, an angle of arrival, and power of the echo signal.

S603: The first network element determines a sensing result in the signal coverage of the first sensing signal based on the measurement result of the first sensing signal.

Optionally, in this embodiment of this application, the sensing result includes feature information respectively corresponding to at least one sensing object. For example, the feature information of the sensing object includes the feature information of the target object and a type of the target object.

In an example, when the measurement result of the first sensing signal includes the feature information respectively corresponding to the at least one point, determining the sensing result in the signal coverage of the first sensing signal based on the measurement result of the first sensing signal includes: determining, based on the feature information respectively corresponding to the at least one point, the feature information respectively corresponding to the at least one target object; determining, based on the feature information respectively corresponding to the at least one target object, a type of each target object in the at least one target object, to obtain the at least one sensing object, where the sensing object is in a one-to-one correspondence with the target object; and determining the feature information of the target object as the feature information of the sensing object. In other words, the sensing object is a target object with an identifier.

In another example, when the measurement result of the first sensing signal includes the feature information respectively corresponding to the at least one target object, determining the sensing result in the signal coverage of the first sensing signal based on the measurement result of the first sensing signal includes: determining a type of each target object in the at least one target object based on the feature information of the at least one target object, to obtain the at least one sensing object, where the sensing object is in a one-to-one correspondence with the target object; and determining the feature information of the target object as the feature information of the sensing object.

In another example, when the measurement result of the first sensing signal includes the feature information of the echo signal of the first sensing signal, the first network element may determine, based on the feature information of the echo signal and at least one of position information or time information of a device that receives the echo signal, feature information respectively corresponding to at least one point corresponding to the echo signal. Then, the feature information respectively corresponding to the at least one target object is determined based on the feature information respectively corresponding to the at least one point.

With reference to the foregoing three examples, for example, after determining the at least one target object, the first network element determines an actual object (namely, the type of the target object) of each target object based on the feature information of the target object. For example, it is determined that the target object #1 is a bird. In this case, the identifier of the target object #1 indicates the bird. It is determined that the target object #2 is a kite. In this case, an identifier of the target object #2 indicates the kite.

S604: The first network element sends the sensing result in the signal coverage of the first sensing signal to the second network element. Correspondingly, the second network element receives the sensing result in the signal coverage of the first sensing signal from the first network element.

According to the communication method provided in this embodiment of this application, the first network element can learn, based on the position information of the target point, a measurement result (namely, the measurement result of the first sensing signal) obtained by measuring an area (namely, the signal coverage of the first sensing signal) in which the target point is located, and determine a sensing result of the area based on the measurement result, namely, an object existing in the area. In other words, the first network element can learn all objects (for example, an object having a communication function and an object having no communication function) existing in the area. In comparison with a solution in which an object having a PC5 communication function is determined through a PC5 communication technology, more objects can be learned. Therefore, precision of determining a high-altitude environment of the area in which the target point is located can be improved.

In addition, it may be understood that the sensing result can be used to determine a security threat at the target point (for example, determine whether the terminal device has a collision risk at the target point). Therefore, in comparison with determining the security threat at the target point through the PC5 communication technology, the security threat at the target point can be determined based on more objects, thereby improving precision of the determined security threat at the target point (for example, precision of the collision risk).

The foregoing is overall descriptions of the communication method provided in embodiments of this application. The following describes in detail the first network element in the foregoing embodiments. For example, the first network element may be implemented based on the following three scenarios.

Scenario 1: The first network element is a network element having a sensing function in a core network.

Optionally, in Scenario 1, the second network element may include three possible implementations.

In a possible implementation in Scenario 1, the second network element is a serving radio access network device of the terminal device. In this implementation, the serving radio access network device may directly communicate with the first network element; or the serving radio access network device may communicate with the first network element through an AMF network element. In other words, a communication system may include the network element shown in FIG. 5A. This is not specifically limited in embodiments of this application.

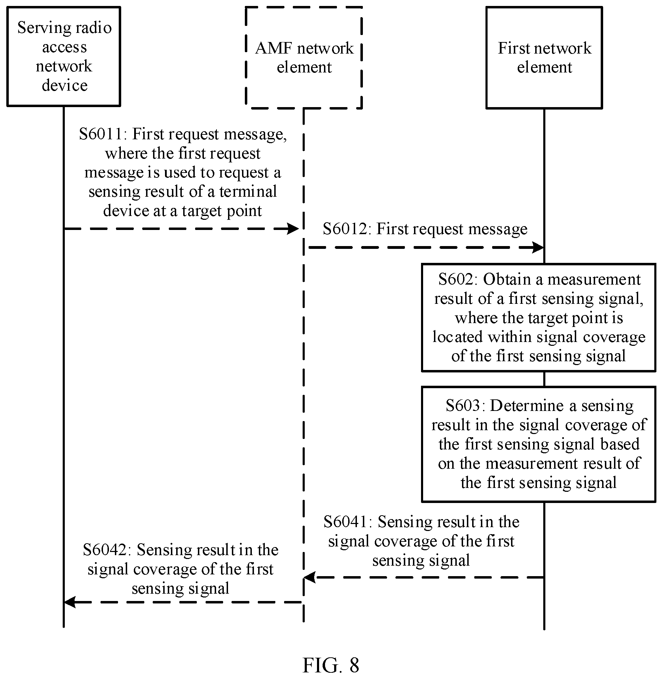

For example, when the serving radio access network device communicates with the first network element through the AMF network element, step S601 may be replaced with steps S6011 and S6012 shown in FIG. 8.

S6011: The serving radio access network device sends the first request message to the AMF network element. Correspondingly, the AMF network element receives the first request message from the serving radio access network device.

S6012: The AMF network element sends the first request message to the first network element. Correspondingly, the first network element receives the first request message from the AMF network element.

In an example, that the AMF network element sends the first request message to the first network element may be understood as follows: The AMF network element transparently transmits the first request message to the first network element. To be specific, after receiving the first request message from the serving radio access network device, the AMF network element directly sends the first request message to the first network element without processing the first request message.

In another example, that the AMF network element sends the first request message to the first network element may be understood as follows: The AMF network element sends the first request message in a first message format to the first network element. The first message format is a message format used for transmission between the AMF network element and the first network element.

For example, in this example, after receiving the first request message from the second network element, the AMF network element adjusts a message format of the first request message to the first message format, and then sends the adjusted first request message to the first network element.

Similarly, when the communication system includes the network element shown in FIG. 5A, step S604 may be replaced with steps S6041 and S6042 shown in FIG. 8.

S6041: The first network element sends the sensing result in the signal coverage of the first sensing signal to the AMF network element. Correspondingly, the AMF network element receives the sensing result in the signal coverage of the first sensing signal from the first network element.

S6042: The AMF network element sends the sensing result in the signal coverage of the first sensing signal to the serving radio access network device. Correspondingly, the serving radio access network device receives the sensing result in the signal coverage of the first sensing signal from the AMF network element.

For example, that the AMF network element sends the sensing result in the signal coverage of the first sensing signal to the serving radio access network device may be understood as follows: The AMF network element transparently transmits the sensing result in the signal coverage of the first sensing signal to the serving radio access network device. Alternatively, that the AMF network element sends the first request message to the first network element may be understood as follows: The AMF network element sends the sensing result in the signal coverage of the first sensing signal in a second message format to the first network element. The second message format is a message format used for transmission between the AMF network element and the serving radio access network device.

In another possible implementation in Scenario 1, the second network element is an AMF network element.

In an example, the AMF network element may send the first request message to a serving radio access network device, to send the first request message to the first network element through the serving radio access network device.

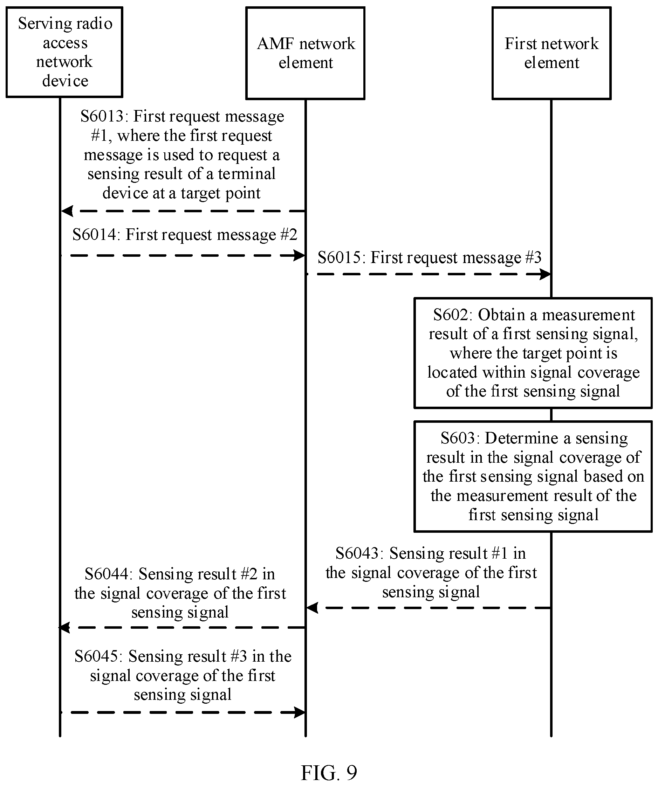

For example, in this example, step S601 may be replaced with steps S6013 to S6015 shown in FIG. 9.

S6013: The AMF network element sends a first request message #1 to the serving radio access network device. Correspondingly, the serving radio access network device receives the first request message #1 from the AMF network element.

For example, the first request message #1 may be the same as or different from the first request message. For example, a message format of the first request message #1 is different from a message format of the first request message.

S6014: The serving radio access network device sends a first request message #2 to the AMF network element. Correspondingly, the AMF network element receives the first request message #2 from the serving radio access network device.

For example, the first request message #2 may be the same as or different from the first request message #1. For example, a message format of the first request message #2 is different from the message format of the first request message #1.

S6015: The AMF network element sends a first request message #3 to the first network element. Correspondingly, the first network element receives the first request message #3 from the AMF network element.

For example, the first request message #3 may be the same as or different from the first request message #2. For example, a message format of the first request message #3 is different from the message format of the first request message #2.

Similarly, step S604 may be replaced with steps S6043 to S6045 shown in FIG. 9.

S6043: The first network element sends a sensing result #1 in the signal coverage of the first sensing signal to the AMF network element. Correspondingly, the AMF network element receives the sensing result #1 in the signal coverage of the first sensing signal from the first network element.

For example, the sensing result #1 in the signal coverage of the first sensing signal may be the same as or different from the sensing result in the signal coverage of the first sensing signal. For example, a message format of the sensing result #1 in the signal coverage of the first sensing signal is different from a message format of the sensing result in the signal coverage of the first sensing signal.

S6044: The AMF network element sends a sensing result #2 in the signal coverage of the first sensing signal to the serving radio access network device. Correspondingly, the serving radio access network device receives the sensing result #2 in the signal coverage of the first sensing signal.

For example, the sensing result #2 in the signal coverage of the first sensing signal may be the same as or different from the sensing result #1 in the signal coverage of the first sensing signal. For example, a message format of the sensing result #2 in the signal coverage of the first sensing signal is different from the message format of the sensing result #1 in the signal coverage of the first sensing signal.

S6045: The serving radio access network device sends a sensing result #3 in the signal coverage of the first sensing signal to the AMF network element. Correspondingly, the AMF network element receives the sensing result #3 in the signal coverage of the first sensing signal from the serving radio access network device.

For example, the sensing result #3 in the signal coverage of the first sensing signal may be the same as or different from the sensing result #2 in the signal coverage of the first sensing signal. For example, a message format of the sensing result #3 in the signal coverage of the first sensing signal is different from the message format of the sensing result #2 in the signal coverage of the first sensing signal.

In another example, the AMF network element may directly send the first request message to the first network element.

In another possible implementation in Scenario 1, the second network element is a USS network element/UTM network element.

Optionally, in this possible implementation, the USS network element/UTM network element may directly communicate with the first network element; or the USS network element/UTM network element may communicate with the first network element through a UAS-NF network element. In other words, the communication system includes the network element shown in FIG. 5B. This is not specifically limited in embodiments of this application.

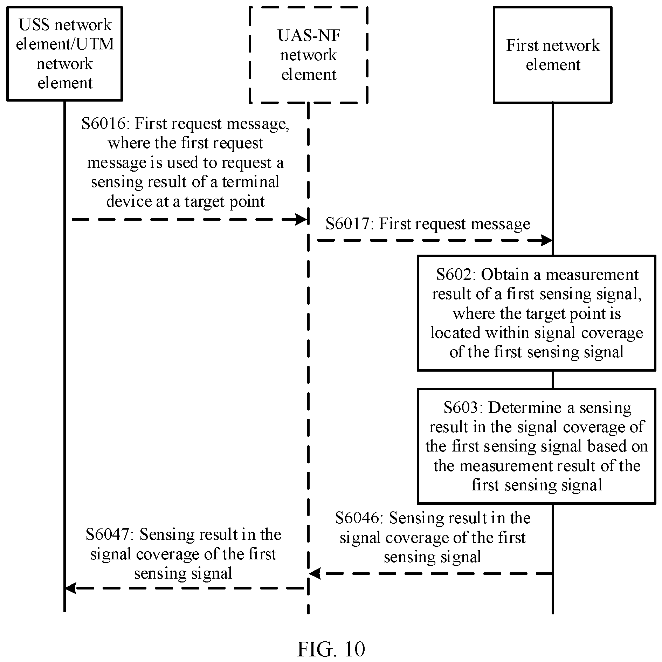

For example, when the USS network element/UTM network element communicates with the first network element through the UAS-NF network element, step S601 may be replaced with steps S6016 and S6017 shown in FIG. 10.

S6016: The USS network element/UTM network element sends the first request message to the UAS-NF network element. Correspondingly, the UAS-NF network element receives the first request message from the USS network element/UTM network element.

S6017: The UAS-NF network element sends the first request message to the first network element. Correspondingly, the first network element receives the first request message from the UAS-NF network element.

For example, processing of the first request message by the UAS-NF network element is the same as processing of the first request message by the AMF network element in FIG. 8. For details, refer to the related descriptions in FIG. 8. Details are not described herein again.

Similarly, when the communication system includes the network element shown in FIG. 5B, step S604 may be replaced with steps S6046 and S6047 shown in FIG. 10.

S6046: The first network element sends the sensing result in the signal coverage of the first sensing signal to the UAS-NF network element. Correspondingly, the UAS-NF network element receives the sensing result in the signal coverage of the first sensing signal from the first network element.

S6047: The UAS-NF network element sends the sensing result in the signal coverage of the first sensing signal to the USS network element/UTM network element. Correspondingly, the USS network element/UTM network element receives the sensing result in the signal coverage of the first sensing signal from the UAS-NF network element.

For example, processing of the sensing result in the signal coverage of the first sensing signal by the UAS-NF network element is the same as processing of the sensing result in the signal coverage of the first sensing signal by the AMF network element in FIG. 8. For details, refer to the related descriptions in FIG. 8. Details are not described herein again.

Optionally, in Scenario 1, the communication system may further include the following two possible implementations.

In a possible implementation, the communication system may further include a first radio access network device. In this case, the communication system includes the second network element, the first network element, and the first radio access network device. In this possible implementation, the first radio access network device is a device configured to measure the first sensing signal. In other words, the first radio access network device may be replaced with the device configured to measure the first sensing signal. For ease of description, the device configured to measure the first sensing signal is referred to as a measurement device for short below.

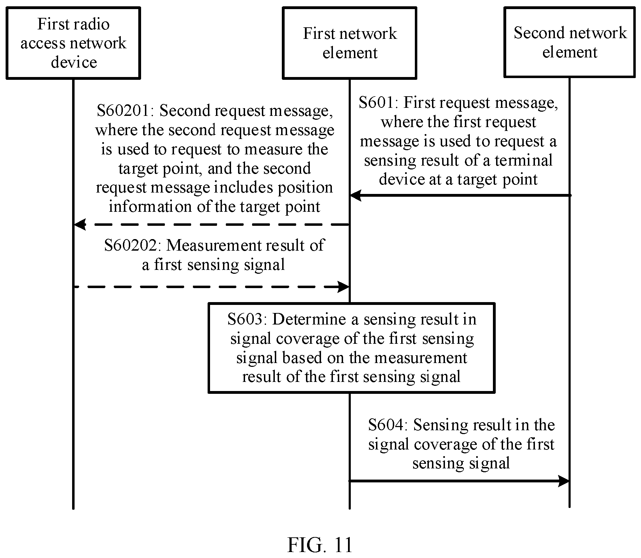

Optionally, in this possible implementation, a process in which the first network element obtains the measurement result of the first sensing signal includes the following steps S60201 and S60202 shown in FIG. 11. In other words, step S602 may be replaced with steps S60201 and S60202.

S60201: The first network element sends a second request message to the first radio access network device. Correspondingly, the first radio access network device receives the second request message from the first network element. The second request message is used to request to measure the first sensing signal, and the second request message includes the position information of the target point.

Optionally, the second request message further includes at least one of a configuration parameter of the first sensing signal, first sensing duration, and first sensing quality of service (quality of service, QoS). The configuration parameter of the first sensing signal includes at least one of a message ID, a resource configuration, a frequency domain bandwidth, a time domain periodicity, transmit power, or a signal waveform of the first sensing signal. The first sensing duration is duration from a moment at which the second request message is received to a moment at which the measurement result of the first sensing signal is sent. The first sensing QoS is related to at least one of a quantity of devices configured to perform collaborative measurement on the first sensing signal (for ease of description, the device configured to perform collaborative measurement on the first sensing signal is referred to as a collaboration device for short below) or the configuration parameter of the first sensing signal. The target point is located within signal coverage of the collaboration device.

Optionally, the first sensing QoS is related to at least one of a quantity of collaboration devices or the configuration parameter of the first sensing signal. When the second request message includes the configuration parameter of the first sensing signal, the first sensing QoS is related to the quantity of collaboration devices.

For example, the first sensing QoS includes at least one of first precision and first confidence. For example, a larger value of the first confidence indicates larger corresponding transmit power of the first sensing signal, a wider frequency domain bandwidth of the first sensing signal, a shorter time domain periodicity of the first sensing signal, and/or a larger quantity of collaboration devices. A smaller value of the first precision indicates larger corresponding transmit power of the first sensing signal, a wider frequency domain bandwidth of the first sensing signal, a shorter time domain periodicity of the first sensing signal, and/or a larger quantity of collaboration devices.

Optionally, the first precision includes first position precision and/or first speed precision. In other words, a smaller value of the first position precision indicates larger corresponding transmit power of the first sensing signal, a wider frequency domain bandwidth of the first sensing signal, a shorter time domain periodicity of the first sensing signal, and/or a larger quantity of collaboration devices. Alternatively, a smaller value of the first speed precision indicates larger corresponding transmit power of the first sensing signal, a wider frequency domain bandwidth of the first sensing signal, a shorter time domain periodicity of the first sensing signal, and/or a larger quantity of collaboration devices.

Optionally, after receiving the first request message, the first network element may determine, based on the position information of the target point, at least one radio access network device whose signal coverage can cover the position information of the target point. Therefore, one or more radio access network devices in the at least one radio access network device are separately determined as first radio access network devices.

For example, the at least one first radio access network device may include a serving radio access network device, or the at least one first radio access network device may include a radio access network device other than the serving radio access network device.

Optionally, before step S60201, the first network element may determine the second request message based on the first request message. For example, the configuration parameter of the first sensing signal included in the second request message may include the following two possible implementations.

In an example, the first network element may determine the configuration parameter of the first sensing signal, for example, the transmit power of the first sensing signal, based on the position information of the target point, so that coverage of a sensing signal sent at the transmit power can cover the target point.

In another example, the first network element may determine the configuration parameter of the first sensing signal based on second sensing QoS. The second sensing QoS is carried in the first request message. In other words, the second sensing QoS is related to at least one item in the configuration parameter of the first sensing signal.

For example, the second sensing QoS includes at least one of second precision and second confidence. For example, a larger value of the second confidence indicates larger corresponding transmit power of the first sensing signal, a wider frequency domain bandwidth of the first sensing signal, and/or a shorter time domain periodicity of the first sensing signal. A smaller value of the second precision indicates larger corresponding transmit power of the first sensing signal, a wider frequency domain bandwidth of the first sensing signal, and/or a shorter time domain periodicity of the first sensing signal.

Optionally, the second sensing QoS is further related to a quantity of measurement devices. For example, a larger value of the second confidence indicates a larger quantity of corresponding measurement devices (for example, first radio access network devices), or a smaller value of the second precision indicates a larger quantity of corresponding measurement devices. Therefore, the first network element may determine one or more radio access network devices in the at least one radio access network device as first radio access network devices based on the second sensing QoS.

Optionally, the second precision includes second position precision and/or second speed precision. In other words, a smaller value of the second position precision indicates larger corresponding transmit power of the first sensing signal, a wider frequency domain bandwidth of the first sensing signal, a shorter time domain periodicity of the first sensing signal, and/or a larger quantity of measurement devices. Alternatively, a smaller value of the second speed precision indicates larger corresponding transmit power of the first sensing signal, a wider frequency domain bandwidth of the first sensing signal, a shorter time domain periodicity of the first sensing signal, and/or a larger quantity of measurement devices.

With reference to the foregoing two optional solutions, it can be learned that the first request message may further include the second sensing QoS. The second sensing QoS is related to at least one of the quantity of measurement devices or the configuration parameter of the first sensing signal.

Based on this optional solution, the first network element can determine the quantity of measurement devices based on the second sensing QoS, to meet a precision requirement of the first request message for the sensing result in the signal coverage of the first sensing signal, and/or the first network element can determine the configuration parameter of the first sensing signal based on the second sensing QoS, to obtain the sensing result in the signal coverage of the first sensing signal, thereby meeting a requirement of the first request message for the sensing result of the target point.

Optionally, the first network element may further determine the first sensing QoS based on the second sensing QoS. For example, a value of the second sensing QoS may be the same as or different from a value of the first sensing QoS. For example, the first network element uses the value of the second sensing QoS as the value of the first sensing QoS.

S60202: The first radio access network device sends the measurement result of the first sensing signal to the first network element. Correspondingly, the first network element receives the measurement result of the first sensing signal from the first radio access network device.

Optionally, the measurement device may further send at least one of position information or time information of the measurement device to the first network element. Correspondingly, the first network element receives at least one of the position information or the time information of the measurement device from the measurement device. At least one of the position information or the time information of the measurement device is used to determine the sensing result in the signal coverage of the first sensing signal. For example, when the measurement result of the first sensing signal includes the feature information of the echo signal of the first sensing signal, the first network element may determine, based on the measurement result of the first sensing signal and at least one of the position information or the time information of the measurement device, the feature information respectively corresponding to the at least one point, to further determine the sensing result in the signal coverage of the first sensing signal. In this case, the device receiving the echo signal is the first radio access network device.

For example, at least one of the position information or the time information of the measurement device may be understood as: the position information of the measurement device, the time information of the measurement device, or the position information and the time information of the measurement device.

For example, the measurement device includes the first radio access network device. In other words, the first radio access network device sends at least one of position information or time information of the first radio access network device to the first network element. Correspondingly, the first network element receives at least one of the position information or the time information of the first radio access network device from the first radio access network device.

It should be noted that, in FIG. 11, one first radio access network device is used as an example to describe interaction between the first network element and one first radio access network device. The first network element may alternatively interact with a plurality of first radio access network devices. An implementation of the interaction is the same as the implementation of the interaction between the first network element and one first radio access network device in FIG. 11. For details, refer to the related descriptions in FIG. 11. Details are not described herein again.

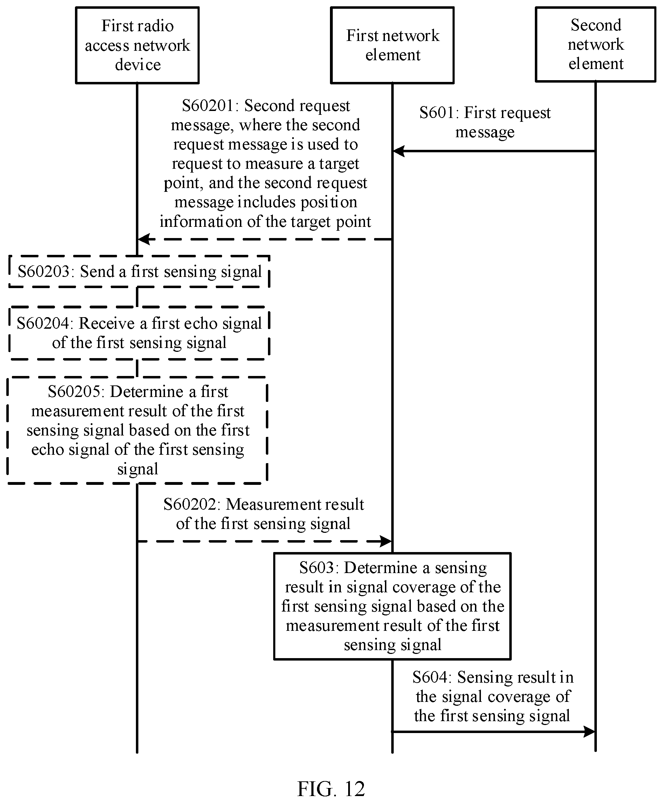

Optionally, before step S60202, as shown in FIG. 12, the communication method may further include the following steps S60203 to S60205.

S60203: The first radio access network device sends the first sensing signal.

For example, the second request message includes the configuration parameter of the first sensing signal, and the first radio access network device may send the first sensing signal based on the configuration parameter of the first sensing signal.

Alternatively, for example, the second request message includes position information of a target device, and the first radio access network device determines the configuration parameter of the first sensing signal. For example, the first radio access network device may determine the configuration parameter of the first sensing signal based on the position information of the target device, and then send the first sensing signal based on the configuration parameter of the first sensing signal.

For example, the first sensing signal may be a reference signal, for example, a channel state information reference signal (channel state information reference signal, CSI-RS), a cell-specific reference signal (cell-specific reference signal, CRS), a positioning reference signal (positioning reference signal, PRS), or a sensing reference signal introduced for sensing.

S60204: The first radio access network device receives a first echo signal of the first sensing signal.

For example, the first echo signal of the first sensing signal may be understood as a first sensing signal that is received by the first radio access network device and that is reflected or refracted by an object in the signal coverage of the first sensing signal.

S60205: The first radio access network device determines a first measurement result of the first sensing signal based on the first echo signal of the first sensing signal. The first measurement result is used to determine the sensing result of the terminal device at the target point.

In an example, the first radio access network device may determine feature information of the first echo signal based on the first echo signal corresponding to the first sensing signal. In this case, the first measurement result includes the feature information of the first echo signal.

Optionally, in this example, the first radio access network device may further send at least one of the position information or the time information of the first radio access network device to the first network element. At least one of the position information or the time information of the first radio access network device is used to determine the sensing result in the signal coverage of the first sensing signal.

For example, the position information of the first radio access network device may be understood as position information of an antenna panel that is in a plurality of antenna panels of the first radio access network device and that is used to send the first sensing signal. The time information of the first radio access network device may be understood as absolute time used by the first radio access network device, for example, coordinated universal time (coordinated universal time, UTC). In another example, the first radio access network device may separately determine position information of the at least one point in each periodicity based on a first echo signal corresponding to the first sensing signal in the periodicity. For example, the first radio access network device may determine the position information of the at least one point based on a moment at which the first sensing signal is sent and a moment at which the first echo signal is received. The first radio access network device determines at least one of a movement speed and a movement direction of the at least one point based on position information of the at least one point in a plurality of periodicities. In this case, the first measurement result includes the feature information respectively corresponding to the at least one point.

In another example, based on the another example above, after determining the feature information respectively corresponding to the at least one point, the first radio access network device may further determine, based on the feature information respectively corresponding to the at least one point, the feature information respectively corresponding to the at least one target object. In this case, the first measurement result includes the feature information respectively corresponding to the at least one target object.

In this case, the measurement result of the first sensing signal in step S60202 includes the first measurement result. In other words, in this case, step S60202 may be replaced with that the first radio access network device sends the first measurement result of the first sensing signal to the first network element. Correspondingly, the first network element receives the first measurement result of the first sensing signal.

Based on this optional solution, the first network element can send the second request message to the first radio access network device based on the position information of the target point, so that the first measurement result of the first sensing signal can be obtained from the first radio access network device, to provide a basis for a fourth network element/the first network element to determine the sensing result in the signal coverage of the first sensing signal based on the first measurement result of the first sensing signal.

Optionally, based on the embodiment in FIG. 12, the communication system may further include a second radio access network device. In this case, the communication system includes the serving radio access network device, the first network element, the first radio access network device, and the second radio access network device. The second radio access network device is a device configured to perform collaborative measurement on the first sensing signal. In other words, the second radio access network device may be replaced with the device configured to perform collaborative measurement on the first sensing signal.

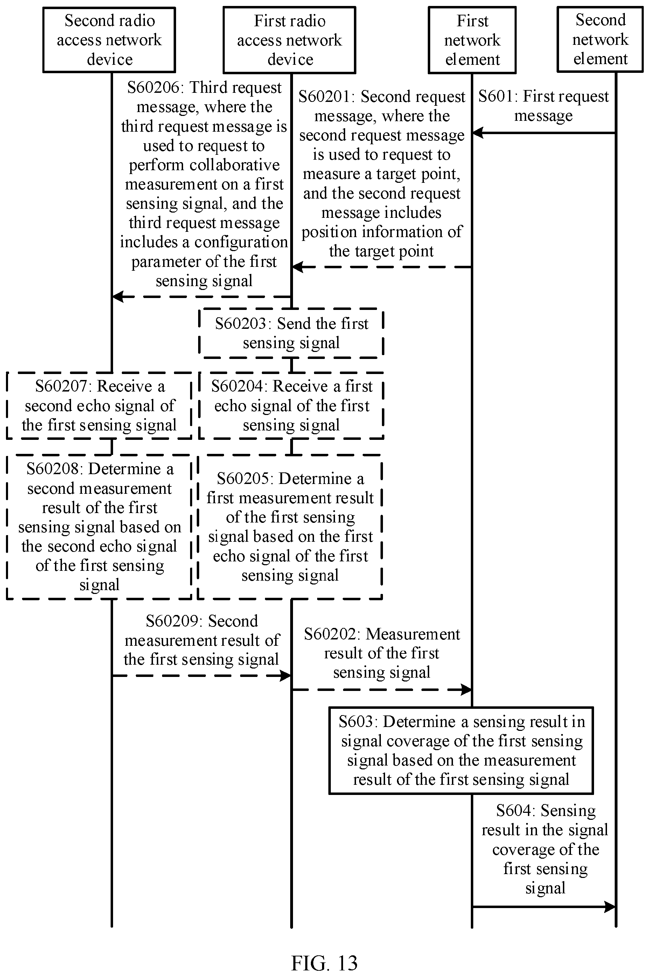

For example, before step S60203, as shown in FIG. 13, the communication method may further include the following steps S60206 to S60209.

S60206: The first radio access network device sends a third request message to the second radio access network device. Correspondingly, the second radio access network device receives the third request message from the first radio access network device. The third request message is used to request to perform collaborative measurement on the first sensing signal, and the third request message includes the configuration parameter of the first sensing signal.

Optionally, the second radio access network device is one or more radio access network devices other than the first radio access network device in the at least one radio access network device whose signal coverage can cover the position information of the target point.

Optionally, before step S60206, the first radio access network device may determine, based on the second request message (for example, the first sensing QoS), a quantity of devices (namely, second radio access network devices) configured to perform collaborative measurement on the first sensing signal. Alternatively, the first radio access network device may determine the quantity of second radio access network devices based on a precision requirement of the first radio access network device for the measurement result.

Optionally, the third request message may further include an ID of the third request message. The ID of the third request message is used by the second radio access device to identify the third request message and respond to the third request message.

Optionally, the second radio access network device may further receive at least one of the position information or the time information of the measurement device from the first radio access network device. At least one of the position information or the time information of the measurement device is used to determine a second measurement result.

In an example, at least one of the position information or the time information of the measurement device may be carried in the third request message. In this case, the third request message may indicate at least one of the position information or the time information of the measurement device.

For example, the third request message may include at least one of the position information or the time information of the measurement device. Alternatively, the third request message includes any one of a TRP ID, a cell ID, and a beam ID. In this case, any one of the TRP ID, the cell ID, and the beam ID is associated with the plurality of antenna panels of the measurement device. Therefore, the third request message can indicate, by using any one of the TRP ID, the cell ID, and the beam ID, position information of the antenna panel used to send the first sensing signal.

For example, when the measurement device is the first radio access network device, the third request message indicates at least one of the position information or the time information of the first radio access network device.

Based on this optional solution, the third request message indicates at least one of the position information or the time information of the measurement device, so that the collaboration device learns either of a sending moment of the first sensing signal and a sending position of the first sensing signal, and the collaboration device may determine the second measurement result based on either of the sending moment of the first sensing signal and the sending position of the first sensing signal. In comparison with a solution in which the second measurement result is determined based on the configuration parameter of the first sensing signal, accuracy of the second measurement result can be improved.

In another example, at least one of the position information or the time information of the measurement device may be carried in information other than the third request message.

For example, the information used to carry at least one of the position information or the time information of the measurement device may be sent by the first radio access network device to the second radio access network device when the third request message is sent. Alternatively, the information (namely, the information used to carry at least one of the position information or the time information of the measurement device) is sent by the first radio access network device to the second radio access network device before the third request message is sent, or the information may be sent by the first radio access network device to the second radio access network device after the third request message is sent. This is not limited in embodiments of this application, provided that the second radio access network device receives the information before determining the second measurement result.

For example, the information used to carry at least one of the position information or the time information of the measurement device may indicate at least one of the position information or the time information of the measurement device by using any one of a TRP ID, a cell ID, and a beam ID. In this case, any one of the TRP ID, the cell ID, and the beam ID is associated with the plurality of antenna panels of the measurement device. Therefore, the information used to carry at least one of the position information or the time information of the measurement device can indicate, by using any one of the TRP ID, the cell ID, and the beam ID, position information of the antenna panel used to send the first sensing signal.

S60207: The second radio access network device receives a second echo signal of the first sensing signal.

For example, the second radio access network device may receive the second echo signal of the first sensing signal on the resource configuration indicated by the configuration parameter of the first sensing signal.

For example, the second echo signal of the first sensing signal may be understood as a first sensing signal that is received by the second radio access network device and that is reflected or refracted by an object in the signal coverage of the first sensing signal.

In an example, when the second radio access network device receives the second echo signal on the resource configuration indicated by the configuration parameter of the first sensing signal, the second radio access network device may perform the following steps.

S60208: The second radio access network device determines the second measurement result of the first sensing signal based on the second echo signal of the first sensing signal. The second measurement result is used to determine the sensing result of the terminal device at the target point.

For example, the second measurement result includes a feature signal of the second echo signal, or the second measurement result includes the feature information respectively corresponding to the at least one point, or the second measurement result includes the feature information respectively corresponding to the at least one target object. An implementation of the second measurement result is similar to the implementation of the first measurement result in step S60205. For details, refer to the related descriptions of step S60205. Details are not described herein again.

S60209: The second radio access network device sends the second measurement result of the first sensing signal to the first radio access network device. Correspondingly, the first radio access network device receives the second measurement result of the first sensing signal from the second radio access network device.

Optionally, the second measurement result is carried in a first response message. The first response message may include the ID of the third request message, used by the first radio access network device for identification, where the first response message is a response message corresponding to the third request message.

Optionally, the collaboration device may further send at least one of the position information or the time information of the collaboration device to the measurement device. At least one of the position information or the time information of the collaboration device is used to determine the sensing result in the signal coverage of the first sensing signal.

For example, in this possible implementation, the measurement device is the first radio access network device, and the collaboration device is the second radio access network device. Therefore, that the collaboration device may further send at least one of the position information or the time information of the collaboration device to the measurement device includes that the second radio access network device sends at least one of position information or time information of the second radio access network device to the first radio access network device. Correspondingly, the first radio access network device receives at least one of the position information or the time information of the second radio access network device from the second radio access network device.

In a possible implementation, when the second measurement result includes the feature signal of the second echo signal, the first radio access network device may process the feature signal of the second echo signal based on at least one of the position information or the time information of the collaboration device, to obtain the feature information respectively corresponding to the at least one point/target object.

Optionally, in this possible implementation, the first radio access network device may send the feature information respectively corresponding to the at least one point/target object to the first network element, so that the first network element may determine the sensing result in the signal coverage of the first sensing signal based on the feature information respectively corresponding to the at least one point/target object.

In this possible implementation, the measurement result of the first sensing signal received by the first network element includes the first measurement result and the feature information that is determined based on the second measurement result and that respectively corresponds to the at least one point/target object.

In another possible implementation, when the second measurement result includes the feature signal of the second echo signal, the first network element may process the feature signal of the second echo signal based on at least one of the position information or the time information of the collaboration device, to obtain the feature information respectively corresponding to the at least one point/target object, to further determine the sensing result in the signal coverage of the first sensing signal.

Optionally, in this possible implementation, the first radio access network device may send the second measurement result and at least one of the position information or the time information of the second radio access network device to the first network element, so that the first network element may determine the sensing result in the signal coverage of the first sensing signal based on the second measurement result and at least one of the position information or the time information of the second radio access network device.

The following describes in detail "at least one of the position information or the time information of the collaboration device".

In an example, at least one of the position information or the time information of the collaboration device may be carried in the first response message. In other words, in this case, the first response message includes the second measurement result and at least one of the position information or the time information of the collaboration device.

For example, an implementation in which the first response message includes at least one of the position information or the time information of the collaboration device is similar to the implementation in which the third request message indicates at least one of the position information or the time information of the measurement device. For details, refer to the related descriptions of the third request message. Details are not described herein again.

Optionally, when the collaboration device is the second radio access network device, the first response message includes at least one of the position information or the time information of the second radio access network device.

In another example, at least one of the position information or the time information of the collaboration device may be carried in a message other than the first response message.

For example, when the measurement device is the first radio access network device and the collaboration device is the second radio access network device, the message used to carry at least one of the position information or the time information of the collaboration device may be sent by the second radio access network device to the first radio access network device when the first response message is sent. Alternatively, the message (namely, the message used to carry at least one of the position information or the time information of the second radio access network device) is sent by the second radio access network device to the first radio access network device before the first response message is sent, or the message may be sent by the second radio access network device to the first radio access network device after the first response message is sent. This is not limited in embodiments of this application, provided that it is ensured that the first radio access device sends at least one of the position information or the time information of the second radio access network device to the first network element before step S603, or it is ensured that the second radio access device sends at least one of the position information or the time information of the second radio access network device to the first radio access device before step S60202.

Optionally, after step S60209, the first radio access network device may perform fitting on the first measurement result and the second measurement result to obtain the measurement result of the first sensing signal. For example, the first radio access network device may perform summarization or deduplication processing on the first measurement result and the second measurement result, to obtain the measurement result of the first sensing signal. In other words, the measurement result of the first sensing signal is a measurement result obtained by performing fitting on the first measurement result and the second measurement result. In other words, that the first radio access network device sends the first measurement result of the first sensing signal to the first network element includes: The first radio access network device sends the measurement result of the first sensing signal to the first network element.

Based on this optional solution, the first network element can obtain the second measurement result of the first sensing signal from the second radio access network device, so that the first network element determines the sensing result in the signal coverage of the first sensing signal based on the first measurement result and the second measurement result of the first sensing signal, thereby improving precision of determining the sensing result in the signal coverage of the first sensing signal.

It should be noted that, in FIG. 13, one second radio access network device is used as an example to describe interaction between one first radio access network device and one second radio access network device. One first radio access network device may alternatively interact with a plurality of second radio access network devices. An implementation of the interaction is the same as the implementation of the interaction between one first radio access network device and one second radio access network device in FIG. 13. For details, refer to the related descriptions in FIG. 13. Details are not described herein again.

It should be noted that, in the procedure of the communication method shown in FIG. 13, a sequence of steps S60207 to S60209 and steps S60204 and S60205 is not limited. For example, steps S60207 to S60209 and steps S60204 and S60205 may be simultaneously performed, or steps S60207 to S60209 may be performed before steps S60204 and S60205, or steps S60207 to S60209 may be performed after steps S60204 and S60205, provided that steps S60207 to S60209 are performed before step S60202.

Optionally, in this possible implementation, interaction between the second radio access network device and the first network element is similar to the interaction between the serving radio access network device and the first network element in FIG. 11. To be specific, the second radio access network device may interact with the second network element through the AMF network element. For details, refer to the related descriptions in FIG. 11. Details are not described herein again.

In another possible implementation, the communication system may further include a second CU network element and a second DU network element. The second CU is a CU network element having a part of functions of the first radio access network device. The second DU network element is a DU network element having another part of functions of the first radio access network device. In this possible implementation, the second DU network element is a measurement device. In other words, the second DU network element may be replaced with the measurement device. The second CU network element is responsible for communicating with the first network element and the second DU network element. In other words, the first network element communicates with the second DU network element through the second CU network element.

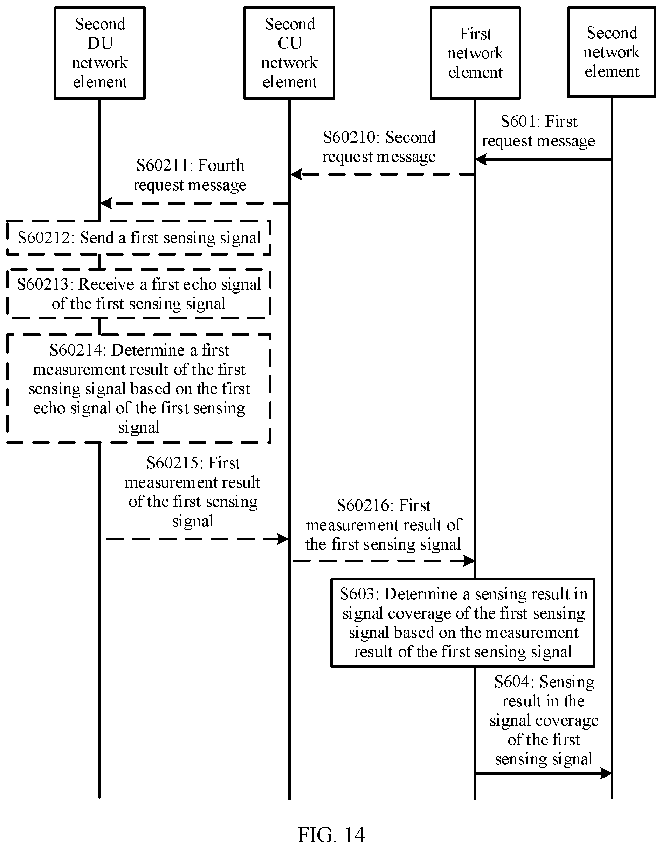

Optionally, in this possible implementation, a process in which the first network element obtains the measurement result of the first sensing signal includes the following steps S60210 to S60216 shown in FIG. 14. In other words, step S602 may be replaced with steps S60210 to S60216.

S60210: The first network element sends a second request message to the second CU network element. Correspondingly, the second CU network element receives the second request message from the first network element. The second request message is used to request to measure the first sensing signal, and the second request message includes the position information of the target point.

For example, for an implementation of the second request message, refer to the related descriptions of step S60201. Details are not described herein again.

Optionally, after receiving the first request message, the first network element may determine, based on the position information of the target point, at least one CU network element whose signal coverage can cover the position information of the target point. Further, the first network element separately determines one or more CU network elements in the at least one CU network element as second CU network elements. For example, the first network element may separately determine one or more CU network elements in the at least one CU network element as second CU network elements based on the second sensing QoS.

For example, the at least one second CU network element may include the first CU network element, or the at least one second CU network element may include a CU network element other than the first CU network element. The first CU network element is a CU network element having a part of functions of the serving radio access network device.

S60211: The second CU network element sends a fourth request message to the second DU network element. Correspondingly, the second DU network element receives the fourth request message from the second CU network element. The fourth request message includes the position information of the target point, and the fourth request message is used to request to measure the first sensing signal.

Optionally, after receiving the second request message, the second CU network element may determine, based on the position information of the target point, at least one DU network element whose signal coverage can cover the position information of the target point. Further, the second CU network element separately determines one or more DU network elements in the at least one DU network element as second DU network elements, to perform step S60211.

Optionally, the fourth request message further includes at least one of the configuration parameter of the first sensing signal, second sensing duration, and third sensing QoS, and the configuration parameter of the first sensing signal includes at least one of the message ID, the resource configuration, the frequency domain bandwidth, the time domain periodicity, the transmit power, or the signal waveform of the first sensing signal. The second sensing duration is duration from a moment at which the fourth request message is received to the moment at which the measurement result of the first sensing signal is sent, and the third sensing QoS is related to at least one of the quantity of measurement devices or the configuration parameter of the first sensing signal.

For example, the third sensing QoS includes at least one of third precision and third confidence. For example, a larger value of the third confidence indicates larger corresponding transmit power of the first sensing signal, a wider frequency domain bandwidth of the first sensing signal, a shorter time domain periodicity of the first sensing signal, and/or a larger quantity of measurement devices. A smaller value of the third precision indicates larger corresponding transmit power of the first sensing signal, a wider frequency domain bandwidth of the first sensing signal, a shorter time domain periodicity of the first sensing signal, and/or a larger quantity of measurement devices.

Optionally, the third precision includes third position precision and/or third speed precision. In other words, a smaller value of the third position precision indicates larger corresponding transmit power of the first sensing signal, a wider frequency domain bandwidth of the first sensing signal, a shorter time domain periodicity of the first sensing signal, and/or a larger quantity of measurement devices. Alternatively, a smaller value of the third speed precision indicates larger corresponding transmit power of the first sensing signal, a wider frequency domain bandwidth of the first sensing signal, a shorter time domain periodicity of the first sensing signal, and/or a larger quantity of measurement devices.

Optionally, before step S60211, the second CU network element may determine the fourth request message based on the second request message. For example, the configuration parameter of the first sensing signal included in the fourth request message may include the following two possible implementations.

In an example, the second CU network element may determine the configuration parameter of the first sensing signal, for example, the transmit power of the first sensing signal, based on the position information of the target point, so that the coverage of the sensing signal sent at the transmit power can cover the target point.

In another example, the second CU network element may determine the configuration parameter of the first sensing signal based on the first sensing QoS. In other words, the first sensing QoS is related to at least one item in the configuration parameter of the first sensing signal. For example, the first sensing QoS includes at least one of first precision and first confidence. For example, a larger value of the first confidence indicates larger corresponding transmit power of the first sensing signal, a wider frequency domain bandwidth of the first sensing signal, and/or a shorter time domain periodicity of the first sensing signal. Alternatively, a smaller value of the first precision indicates larger corresponding transmit power of the first sensing signal, a wider frequency domain bandwidth of the first sensing signal, and/or a shorter time domain periodicity of the first sensing signal.

Optionally, the first sensing QoS is further related to a quantity of second DU network elements. For example, a larger value of the first confidence indicates a larger quantity of corresponding measurement devices (for example, second DU network elements), or a smaller value of the first precision indicates a larger quantity of corresponding measurement devices. Therefore, the second CU network element may determine one or more DU network elements in the at least one DU network element as second DU network elements based on the first sensing QoS.

Optionally, the second CU network element may further determine the third sensing QoS based on the first sensing QoS. For example, the value of the first sensing QoS may be the same as or different from a value of the third sensing QoS. For example, the second CU network element uses the value of the first sensing QoS as the value of the third sensing QoS.

S60212: The second DU network element sends the first sensing signal.

For example, the fourth request message includes the configuration parameter of the first sensing signal, so that the second DU network element may send the first sensing signal based on the configuration parameter of the first sensing signal. Alternatively, the fourth request message includes the position information of the target device, so that the second DU network element may send the first sensing signal based on the position information of the target device. For example, the second DU network element determines the configuration parameter of the first sensing signal based on the position information of the target device, and then sends the first sensing signal based on the configuration parameter of the first sensing signal.

S60213: The second DU network element receives the first echo signal of the first sensing signal.

For example, the first echo signal of the first sensing signal may be understood as a first sensing signal that is received by the second DU network element and that is reflected or refracted by an object in the signal coverage of the first sensing signal.

S60214: The second DU network element determines the first measurement result of the first sensing signal based on the first echo signal of the first sensing signal. The first measurement result is used to determine the sensing result of the terminal device at the target point.

For example, an implementation of the first measurement result is similar to the implementation of the first measurement result in step S60205. For details, refer to the related descriptions of the first measurement result in step S60205. Details are not described herein again.

S60215: The second DU network element sends the first measurement result of the first sensing signal to the second CU network element. Correspondingly, the second CU network element receives the first measurement result of the first sensing signal from the second DU network element.

S60216: The second CU network element may send the first measurement result of the first sensing signal to the first network element. Correspondingly, the first network element receives the first measurement result of the first sensing signal from the second CU network element.

Optionally, in this possible implementation, the measurement device is the second DU network element. Therefore, the measurement device may further send at least one of position information or time information of the measurement device to the first network element. The following two possible implementations are included.

In an example, the second DU network element sends at least one of position information or time information of the second DU network element to the first network element. In this case, at least one of the position information or the time information of the second DU network element is used to determine the sensing result in the signal coverage of the first sensing signal.

For example, that the second DU network element sends at least one of the position information or the time information of the second DU network element to the first network element includes: The second DU network element sends at least one of the position information or the time information of the second DU network element to the second CU network element, and after receiving at least one of the position information or the time information of the second DU network element, the second CU network element sends at least one of the position information or the time information of the second DU network element to the first network element. For example, when the first measurement result includes the feature information of the first echo signal, the first network element may determine the sensing result in the signal coverage of the first sensing signal based on the first measurement result and at least one of the position information or the time information of the second DU network element.

It should be noted that, in FIG. 14, one second CU network element is used as an example to describe interaction between the first network element and one second CU network element. The first network element may alternatively interact with a plurality of second CU network elements. An implementation of the interaction is the same as the implementation of the interaction between the first network element and one second CU network element in FIG. 14. For details, refer to the related descriptions in FIG. 14. Details are not described herein again.

It should be noted that, in FIG. 14, one second DU network element is used as an example to describe interaction between the second CU network element and one second DU network element. The first CU may alternatively interact with a plurality of second DU network elements. An implementation of the interaction is the same as the implementation of the interaction between the second CU and one second DU network element in FIG. 14. For details, refer to the related descriptions in FIG. 14. Details are not described herein again. Optionally, based on the embodiment in FIG. 14, the communication system may further include a collaboration device. In this case, the communication system includes the serving radio access network device, the first network element, the second CU network element, the second DU network element, and the collaboration device. The target point is located within signal coverage of the collaboration device.

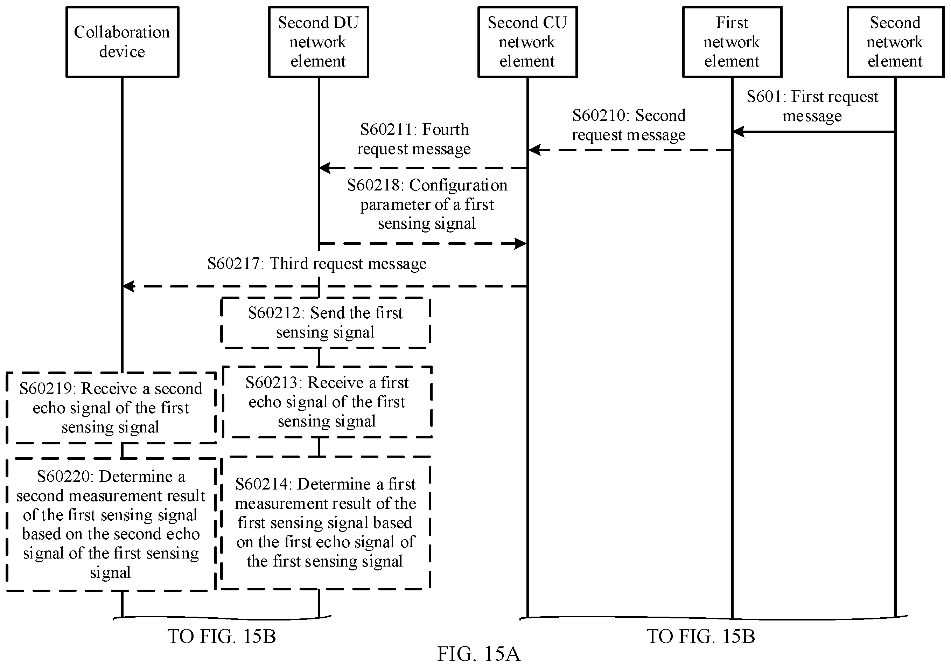

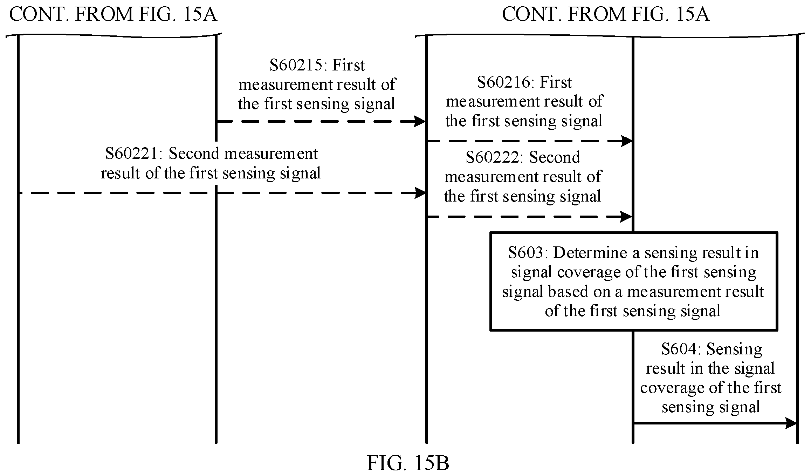

For example, before step S60212, as shown in FIG. 15A and FIG. 15B, the method may further include the following steps S60217 to S60222.

S60217: The second CU network element sends the third request message to the collaboration device. Correspondingly, the collaboration device receives the third request message from the second CU network element.

Optionally, before step S60217, the second CU network element may determine the quantity of collaboration devices based on the second request message (for example, the first sensing QoS). Alternatively, the second CU network element may determine the quantity of collaboration devices based on a precision requirement of the second CU network element for the measurement result.

Optionally, the third request message may further include the ID of the third request message. The ID of the third request message is used by the collaboration device to identify the third request message and respond to the third request message.

Optionally, the collaboration device may further receive at least one of the position information or the time information of the measurement device (namely, the second DU network element) from the second CU network element. At least one of the position information or the time information of the measurement device is used to determine the second measurement result.

Optionally, at least one of the position information or the time information of the second DU network element may be carried in the third request message, or at least one of the position information or the time information of the second DU network element may be carried in information other than the third request message.

For example, a process in which the collaboration device receives at least one of the position information or the time information of the second DU network element from the second CU network element is similar to the process in which the second radio access network device receives at least one of the position information or the time information of the measurement device from the first radio access network device in the foregoing possible implementation. For details, refer to the related descriptions of receiving, by the second radio access network device, at least one of the position information or the time information of the measurement device from the first radio access network device. Details are not described herein again.

Optionally, the second CU network element may alternatively determine the quantity of collaboration devices based on the second request message. If the quantity of collaboration devices is greater than or equal to 1, the second CU network element performs step S60217. Alternatively, the second DU network element determines the quantity of collaboration devices based on the fourth request message. If the quantity of collaboration devices is greater than or equal to 1, the second DU network element notifies the second CU network element, so that the second CU network element performs step S60217.

Optionally, the second CU network element further needs to obtain the configuration parameter of the first sensing signal, to perform step S60217. For example, the second CU network element may obtain the configuration parameter of the first sensing signal in the following two manners.

In an example, the second CU network element may determine the configuration parameter of the first sensing signal based on the second request message.

For example, an implementation in which the second CU network element determines the configuration parameter of the first sensing signal is the same as the implementation of the configuration parameter of the first sensing signal in step S60211. For details, refer to the related descriptions of step S60211. Details are not described herein again.

In another example, the second CU network element may receive the configuration parameter of the first sensing signal from the second DU network element. For example, as shown in FIG. 15A, before step S60217, the communication method may further include step S60218: The second DU network element sends the configuration parameter of the first sensing signal to the second CU network element. Correspondingly, the second CU network element receives the configuration parameter of the first sensing signal from the second DU network element.

For example, the configuration parameter of the first sensing signal from the second DU network element is determined by the second DU network element based on the fourth request message. An implementation in which the second DU network element determines the configuration parameter of the first sensing signal is the same as the implementation of the configuration parameter of the first sensing signal in step S60212. For details, refer to the related descriptions of step S60212. Details are not described herein again.

Based on this example, after receiving the configuration parameter of the first sensing signal, the second CU network element may send the third request message to the collaboration device, so that the collaboration device can measure the first sensing signal. In comparison with determining the configuration parameter of the first sensing signal by the first network element, computational power of the first network element can be reduced.

S60219: The collaboration device receives the second echo signal of the first sensing signal.

For example, the collaboration device may receive the second echo signal of the first sensing signal on the resource configuration indicated by the configuration parameter of the first sensing signal.

For example, the second echo signal of the first sensing signal may be understood as a first sensing signal that is received by the collaboration device and that is reflected or refracted by an object in the signal coverage of the first sensing signal.

In an example, when the collaboration device receives the second echo signal on the resource configuration indicated by the configuration parameter of the first sensing signal, the collaboration device may perform the following steps.

S60220: The collaboration device determines the second measurement result of the first sensing signal based on the second echo signal of the first sensing signal. The second measurement result is used to determine the sensing result of the terminal device at the target point.

For example, an implementation of the second measurement result is similar to the implementation of the second measurement result in step S60208. For details, refer to the related descriptions of step S60208. Details are not described herein again.

S60221: The collaboration device sends the second measurement result of the first sensing signal to the second CU network element. Correspondingly, the second CU network element receives the second measurement result of the first sensing signal from the collaboration device.

Optionally, the collaboration device may further send at least one of position information or time information of the collaboration device to the second CU network element. Correspondingly, the second CU network element receives at least one of the position information or the time information of the collaboration device from the collaboration device. At least one of the position information or the time information of the collaboration device is used to determine the sensing result in the signal coverage of the first sensing signal.

S60222: The second CU network element sends the second measurement result of the first sensing signal to the first network element. Correspondingly, the first network element receives the second measurement result of the first sensing signal from the second CU network element.

For example, step S60216 and step S60222 may be simultaneously performed. Alternatively, the second CU network element may add the first measurement result and the second measurement result to a same message for sending. In other words, step S60216 and step S60222 may be replaced with that the second CU network element sends the first measurement result and the second measurement result of the first sensing signal to the first network element. Correspondingly, the first network element receives the first measurement result and the second measurement result of the first sensing signal from the second CU network element.

For example, after step S60221, the second CU network element may perform fitting on the first measurement result and the second measurement result to obtain the measurement result of the first sensing signal. For example, the second CU network element may perform summarization or deduplication processing on the first measurement result and the second measurement result, to obtain the measurement result of the first sensing signal. In other words, the measurement result of the first sensing signal is a measurement result obtained by performing fitting on the first measurement result and the second measurement result. In other words, that the second CU network element sends the first measurement result and the second measurement result of the first sensing signal to the first network element includes: The second CU network element sends the measurement result of the first sensing signal to the first network element.

Optionally, when the collaboration device may further send at least one of the position information or the time information of the collaboration device to the second CU network element, the second CU network element may further send at least one of the position information or the time information of the second DU network element and the position information or the time information of the collaboration device to the first network element.

In a possible implementation, after receiving the second measurement result from the collaboration device, the second CU network element forwards the second measurement result to the first network element. In this possible implementation, the measurement result of the first sensing signal includes the first measurement result and the second measurement result.

In a possible implementation, after receiving the second measurement result from the collaboration device, the second CU network element processes the second measurement result, and sends a processed second measurement result to the second network element.

For example, when the second measurement result includes the feature signal of the second echo signal, the second CU network element may determine, based on the second measurement result and at least one of the position information or the time information of the collaboration device, the feature information respectively corresponding to the at least one point/target object, and send the feature information respectively corresponding to the at least one point/target object to the first network element. In this case, the measurement result of the first sensing signal includes the first measurement result and the feature information that is determined based on the second measurement result and that respectively corresponds to the at least one point/target object.

Optionally, the second measurement result and at least one of the position information or the time information of the collaboration device may be carried in same information, or the second measurement result and at least one of the position information or the time information of the collaboration device are carried in different information. For details, refer to the related descriptions of step S60208. Details are not described herein again.

It should be noted that, in the procedure of the communication method shown in FIG. 15A and FIG. 15B, a sequence of steps S60219 to S60221 and steps S60213 to S60215 is not limited. For example, S60219 to S60221 and steps S60213 to S60215 may be simultaneously performed, or steps S60219 to S60221 may be performed before steps S60213 to S60215, or steps S60219 to S60221 may be performed after steps S60213 to S60215,

In another example, when the collaboration device does not receive the second echo signal on the resource configuration indicated by the configuration parameter of the first sensing signal, the collaboration device may not perform step S60221. Alternatively, the second measurement result is empty, or the second measurement result indicates that the collaboration device does not receive the second echo signal.

For example, if the second CU network element does not receive the second measurement result from the collaboration device in the first sensing duration, it is determined that the collaboration device does not receive the second echo signal, or the collaboration device does not obtain the second measurement result. In this case, the second CU network element does not need to perform step S60222. In other words, the second CU network element sends the first measurement result of the first sensing signal to the first network element.

It should be noted that, in FIG. 15A and FIG. 15B, one collaboration device is used as an example to describe interaction between one second CU network element and one collaboration device. One second CU network element may alternatively interact with a plurality of collaboration devices. An implementation of the interaction is the same as the implementation of the interaction between one second CU network element and one collaboration device in FIG. 15A and FIG. 15B. For details, refer to the related descriptions in FIG. 15A and FIG. 15B. Details are not described herein again.

The following describes in detail the collaboration device mentioned in the foregoing embodiments. For example, the collaboration device in FIG. 15A and FIG. 15B may include the following three possible implementations.

In a possible implementation, the collaboration device may be a DU network element other than the second DU network element in DU network elements having another part of functions of the first radio access network device. In this case, the device (namely, the second DU network element in FIG. 14 or FIG. 15A and FIG. 15B) configured to measure the first sensing signal in FIG. 14 or FIG. 15A and FIG. 15B may be referred to as a second DU network element #1, and the collaboration device may be referred to as a second DU network element #2. In other words, in FIG. 15A and FIG. 15B, the second DU network element may be replaced with the second DU network element #1, and the collaboration device may be replaced with the second DU network element #2.

In another possible implementation, the collaboration device may be a second radio access network device. For example, an implementation of the second radio access network device is the same as the implementation of the second radio access network device in FIG. 13. For details, refer to the related descriptions in FIG. 13. Details are not described herein again. In other words, in FIG. 15A and FIG. 15B, the collaboration device may be replaced with the second radio access network device.

In another possible implementation, the collaboration device may be a third DU network element. The third DU network element is a DU network element having a part of functions of the second radio access network device. In other words, in FIG. 15A and FIG. 15B, the collaboration device may be replaced with the third DU network element.

Optionally, in this possible implementation, interaction between the third DU network element and the second CU network element may be implemented through a third CU network element. To be specific, the third DU network element may interact with the third CU network element, and the second CU network element may interact with the third CU network element, to implement interaction between the third DU network element and the second CU network element. The third CU network element is a CU network element having another part of functions of the second radio access network device.

For example, in this possible implementation form, as shown in FIG. 16A, step S60217 may be replaced with the following steps.

S60217#1: The second CU network element sends the third request message to the third CU network element. Correspondingly, the third CU network element receives the third request message from the second CU network element.

S60217#2: The third CU network element sends the third request message to the third DU network element. Correspondingly, the third DU network element receives the third request message from the third CU network element.

Optionally, after receiving the third request message, the third CU network element may determine the third DU network element based on the third request message, and sends the third request message to the third DU network element.

Similarly, as shown in FIG. 16B, step S60221 may also be replaced with the following steps.

S60221#1: The third DU network element sends the second measurement result of the first sensing signal to the third CU. Correspondingly, the third CU network element receives the second measurement result of the first sensing signal from the third DU network element.

S60221#2: The third CU network element sends the second measurement result of the first sensing signal to the second CU network element. Correspondingly, the second CU network element receives the second measurement result of the first sensing signal from the third CU network element.

The embodiments in FIG. 8 to FIG. 16B in Scenario 1 are described by using the example in which the first network element is a network element having the sensing function in the core network. The following describes another implementation scenario of the first network element, as described in the following Scenario 2.

Scenario 2: The first network element is a serving radio access network device of the terminal device. For example, in Scenario 2, the second network element may be the terminal device, or the second network element may be an AMF network element. In other words, the first request message received by the serving radio access network device may be from the terminal device or the AMF network element. In this case, the communication system includes the network element shown in FIG. 5C. In this case, a measurement device is the serving radio access network device. In other words, the measurement device may be replaced with the radio access network device.

Optionally, in Scenario 2, the serving radio access network device may determine, based on the first request message (for example, the second sensing QoS and the position information of the target point), whether the collaboration device needs to participate in collaborative measurement of the first sensing signal.

In an example, the serving radio access network device determines that the collaboration device does not need to participate in collaborative measurement of the first sensing signal.

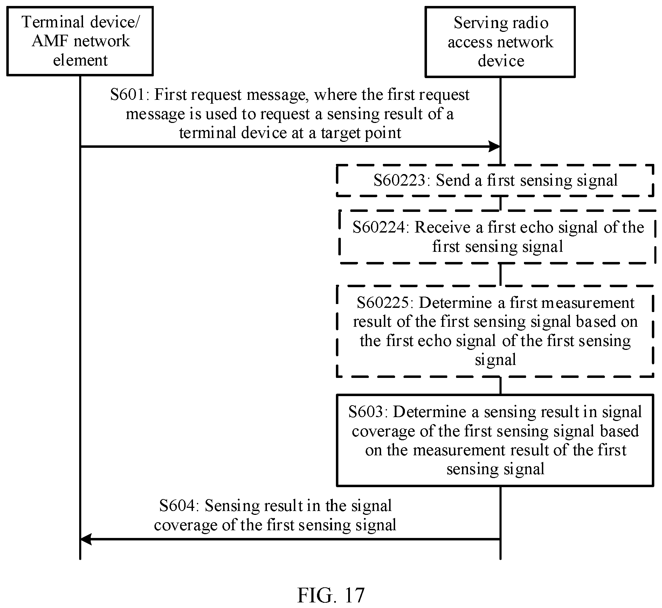

Optionally, in this example, a process in which the serving radio access network device obtains the measurement result of the first sensing signal includes steps S60223 to S60225 shown in FIG. 17. In other words, step S602 may be replaced with steps S60223 to S60225.

S60223: The serving radio access network device sends the first sensing signal.

For example, the serving radio access network device may send the first sensing signal based on the position information of the target device. For example, the first radio access network device determines the configuration parameter of the first sensing signal based on the position information of the target device, and then sends the first sensing signal based on the configuration parameter of the first sensing signal.

For example, an implementation of the first sensing signal is the same as an implementation of the first sensing signal in step S60203. For details, refer to the related descriptions of step S60203. Details are not described herein again.

S60224: The serving radio access network device receives a first echo signal of the first sensing signal.

For example, the first echo signal of the service sensing signal may be understood as a first sensing signal that is received by the serving radio access network device and that is reflected or refracted by an object in the signal coverage of the first sensing signal.

S60225: The serving radio access network device determines a first measurement result of the first sensing signal based on the first echo signal of the first sensing signal.

For example, a process in which the serving radio access network device determines the first measurement result of the first sensing signal is similar to the process in which the first radio access network device determines the first measurement result of the first sensing signal in step S60205. For details, refer to the related descriptions of step S60205. Details are not described herein again.

In this case, the measurement result of the first sensing signal in step S603 includes the first measurement result. In other words, in this case, step S603 may be replaced with that the serving radio access network device determines the sensing result in the signal coverage of the first sensing signal based on the first measurement result of the first sensing signal.

Based on this example, the serving radio access network device can measure, based on the position information of the target point, the area (namely, the signal coverage of the first sensing signal) in which the target point is located, and obtain the sensing result in the signal coverage of the first sensing signal through sensing. This can avoid interaction between a plurality of devices of the sensing result in the signal coverage of the first sensing signal, and shorten a delay in determining the sensing result in the signal coverage of the first sensing signal. Therefore, efficiency of determining the sensing result in the signal coverage of the first sensing signal can be improved.

In another example, the serving radio access network device determines that the collaboration device needs to participate in collaborative measurement of the first sensing signal.

Optionally, in this example, the serving radio access network device may further determine a quantity of collaboration devices. For example, an implementation in which the serving radio access network device determines the quantity of collaboration devices is similar to the implementation in which the first radio access network device determines the second radio access network device in step S60206. For details, refer to the related descriptions of step S60206. Details are not described herein again. For ease of description, an example in which a quantity of collaboration devices is 1 is used below for description.

Optionally, the communication method may further include: The serving radio access network device obtains at least one of position information or time information of the serving radio access network device, where at least one of the position information or the time information of the serving radio access network device is used to determine the sensing result in the signal coverage of the first sensing signal.

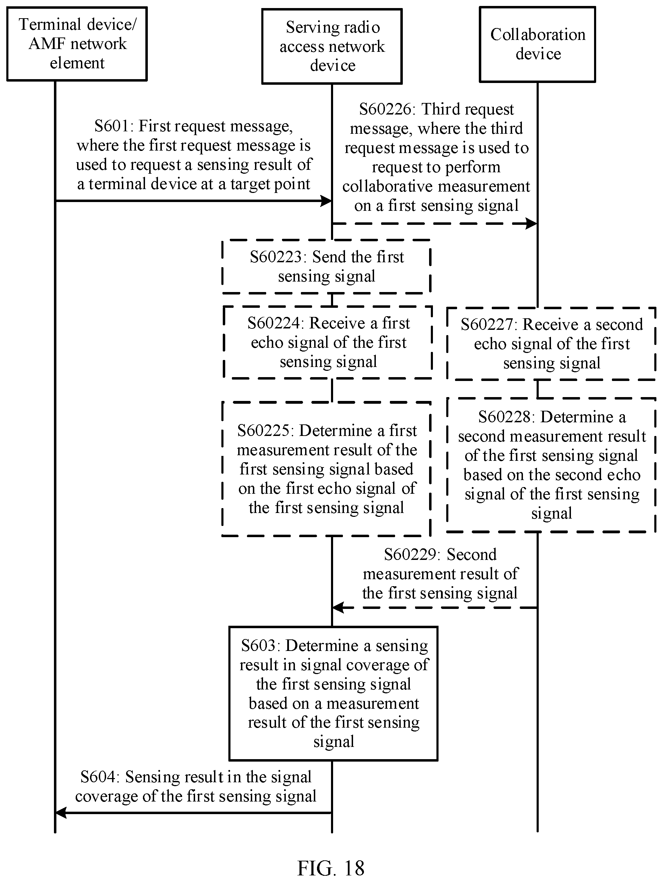

Optionally, in this example, before step S60223, as shown in FIG. 18, the communication method may further include the following steps S60226 to S60229.

S60226: The serving radio access network device sends a third request message to the collaboration device. Correspondingly, the collaboration device receives the third request message from the serving radio access network device. For example, the target point is located within signal coverage of the collaboration device.

Optionally, before step S60226, the serving radio access network device may determine the quantity of collaboration devices based on a second request message (for example, second sensing QoS). Alternatively, the serving radio access network device may determine the quantity of collaboration devices based on a precision requirement of the serving radio access network device for the measurement result.

Optionally, the third request message may further include an ID of the third request message. The ID of the third request message is used by the collaboration device to identify the third request message and respond to the third request message.

Optionally, the collaboration device may further receive at least one of position information or time information of the measurement device (namely, the serving radio access network device) from the serving radio access network device. At least one of the position information or the time information of the measurement device is used to determine a second measurement result.

Optionally, at least one of the position information or the time information of the serving radio access network device may be carried in the third request message, or at least one of the position information or the time information of the serving radio access network device may be carried in information other than the third request message.

For example, a process in which the collaboration device receives at least one of the position information or the time information of the serving radio access network device from the serving radio access network device is similar to the process in which the second radio access network device receives at least one of the position information or the time information of the measurement device from the first radio access network device in step S60206. For details, refer to the related descriptions of step S60206 in which the second radio access network device receives at least one of the position information or the time information of the measurement device from the first radio access network device. Details are not described herein again.

S60227: The collaboration device receives a second echo signal of the first sensing signal.

For example, the collaboration device may receive the second echo signal of the first sensing signal on the resource configuration indicated by the configuration parameter of the first sensing signal.

For example, the second echo signal of the first sensing signal may be understood as a first sensing signal that is received by the collaboration device and that is reflected or refracted by an object in the signal coverage of the first sensing signal.

In a possible implementation, when the collaboration device receives the second echo signal on the resource configuration indicated by the configuration parameter of the first sensing signal, the collaboration device may perform the following steps.

S60228: The collaboration device determines the second measurement result of the first sensing signal based on the second echo signal of the first sensing signal. The second measurement result is used to determine the sensing result of the terminal device at the target point.

For example, the second measurement result includes a feature signal of the second echo signal, or the second measurement result includes feature information that respectively corresponds to the at least one point and that is determined based on the second echo signal, or the second measurement result includes feature information that respectively corresponds to at least one target object and that is determined based on the second echo signal.

S60229: The collaboration device sends the second measurement result of the first sensing signal to the serving radio access network device. Correspondingly, the serving radio access network device receives the second measurement result of the first sensing signal from the collaboration device.

Optionally, in Scenario 2, the measurement device is the serving radio access device. Therefore, that the collaboration device may further send at least one of the position information or the time information of the collaboration device to the measurement device includes that the collaboration device may further send at least one of the position information or the time information of the collaboration device to the serving radio access network device. At least one of the position information or the time information of the collaboration device is used to determine the sensing result in the signal coverage of the first sensing signal.

In a possible implementation, when the second measurement result includes the feature signal of the second echo signal, the serving radio access network device may process the feature signal of the second echo signal based on at least one of the position information or the time information of the collaboration device, to obtain the feature information respectively corresponding to the at least one point/target object. Further, the serving radio access network device may determine the sensing result in the signal coverage of the first sensing signal based on the feature information respectively corresponding to the at least one point/target object.

Optionally, after step S60229, the serving radio access network device may perform fitting on the first measurement result and the second measurement result to obtain the measurement result of the first sensing signal. For example, the serving radio access network device may perform summarization or deduplication processing on the first measurement result and the second measurement result, to obtain the measurement result of the first sensing signal. In other words, the measurement result of the first sensing signal is a measurement result obtained by performing fitting on the first measurement result and the second measurement result. In other words, that the serving radio access network device sends the first measurement result and the second measurement result of the first sensing signal to the first network element includes: The serving radio access network device sends the measurement result of the first sensing signal to the first network element.

It should be noted that, in FIG. 18, one collaboration device is used as an example to describe interaction between the serving radio access network device and one collaboration device. The serving radio access network device may alternatively interact with a plurality of collaboration devices. An implementation of the interaction is the same as the implementation of the interaction between the serving radio access network device and one collaboration device in FIG. 18. For details, refer to the related descriptions in FIG. 18. Details are not described herein again.

It should be noted that, in the procedure of the communication method shown in FIG. 18, a sequence of steps S60227 to S60229 and steps S60224 and S60225 is not limited. For example, steps S60227 to S60229 and steps S60224 and S60225 may be simultaneously performed, or steps S60227 to S60229 may be performed before steps S60224 and S60225, or steps S60227 to S60229 may be performed after steps S60224 and S60225, provided that steps S60227 to S60229 are performed before step S603.

In another possible implementation, when the collaboration device does not receive the second echo signal on the resource configuration indicated by the configuration parameter of the first sensing signal, the collaboration device does not need to continue to perform any operation. Alternatively, the second measurement result is empty, or the second measurement result indicates that the collaboration device does not receive the second echo signal.

For example, if the serving radio access network device does not receive the second measurement result from the collaboration device in the first sensing duration, it is determined that the collaboration device does not receive the second echo signal, or the collaboration device does not obtain the second measurement result.

Optionally, the following describes in detail the collaboration device in Scenario 2. For example, in Scenario 2, the collaboration device may include the following two possible implementations.

In a possible implementation, the collaboration device may be a third radio access network device. The third radio access network device is one or more radio access network devices other than the serving radio access network device in the at least one radio access network device whose signal coverage can cover the position information of the target point. For example, an implementation of the third radio access network device is similar to the implementation of the second radio access network device in FIG. 13. For details, refer to the related descriptions in FIG. 13. Details are not described herein again. In other words, in FIG. 18, the collaboration device may be replaced with the third radio access network device.

In another possible implementation, the collaboration device may be a fourth DU network element. The fourth DU network element is a DU network element having a part of functions of the third radio access network device. In other words, in FIG. 18, the collaboration device may be replaced with the fourth DU network element.

Optionally, in this possible implementation, interaction between the fourth DU network element and the serving radio access network device may be implemented through a fourth CU network element. To be specific, the fourth DU network element may interact with the fourth CU network element, and the serving radio access network device may interact with the fourth CU network element, to implement interaction between the fourth DU network element and the serving radio access network device. The fourth CU network element is a CU network element having another part of functions of the third radio access network device.

For example, an implementation of the fourth CU network element is similar to the implementation of the third CU network element in FIG. 16A and FIG. 16B, and an implementation of the fourth DU network element is similar to the implementation of the third DU network element in FIG. 16A and FIG. 16B. For details, refer to the related descriptions in FIG. 16A and FIG. 16B. Details are not described herein again.

The embodiments in FIG. 17 and FIG. 18 in Scenario 2 are described by using the example in which the first network element is the serving radio access network device of the terminal device. The following describes another implementation scenario of the first network element, as described in the following Scenario 3.

Scenario 3: The first network element is a first CU network element, and the first CU network element is a CU network element having a part of functions of a serving radio access network device. For example, in Scenario 3, the second network element may be the terminal device, or the second network element may be an AMF network element. In other words, the first request message received by the first CU network element may be from the terminal device or the AMF network element. In this case, the communication system includes the network element shown in FIG. 5D.

Optionally, in Scenario 3, the communication system may further include the following two possible implementations.

In a possible implementation, the communication system may further include a first DU network element. In this case, the communication system includes the terminal device/AMF network element, the first CU network element, and the first DU network element. In this possible implementation, a measurement device is the first DU network element. In other words, the measurement device may be replaced with the first DU network element.

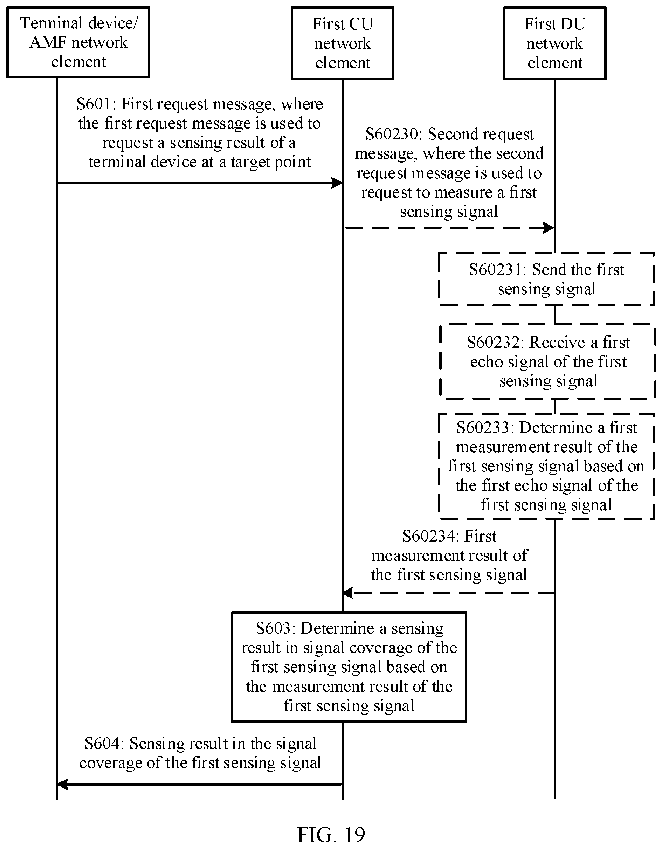

Optionally, in this possible implementation, a process in which the first CU network element obtains the measurement result of the first sensing signal includes the following steps S60230 to S60234 shown in FIG. 19. In other words, step S602 may be replaced with steps S60230 to S60234.

S60230: The first CU network element sends a second request message to the first DU network element. Correspondingly, the first DU network element receives the second request message from the first CU network element.

For example, an implementation of the second request message is the same as the implementation of the second request message in step S60201. For details, refer to the related descriptions of step S60201. Details are not described herein again.

Optionally, the first CU network element may determine a quantity of first DU network elements based on second sensing QoS. For example, a larger value of second confidence in the second sensing QoS indicates a larger quantity of corresponding first DU network elements, or a smaller value of second precision in the second sensing QoS indicates a larger quantity of corresponding first DU network elements.

S60231: The first DU network element sends the first sensing signal.

For example, for a manner in which the first DU network element sends the first sensing signal, refer to the manner in which the first radio access network device sends the first sensing signal in step S60203. Details are not described herein again.

S60232: The first DU network element receives a first echo signal of the first sensing signal.

For example, the first echo signal of the first sensing signal may be understood as a first sensing signal that is received by the second DU network element and that is reflected or refracted by an object in the signal coverage of the first sensing signal.

S60233: The first DU network element determines the first measurement result of the first sensing signal based on the first echo signal of the first sensing signal.

For example, the first measurement result includes feature information of the first echo signal, or the first measurement result includes feature information respectively corresponding to at least one point/target object. For an implementation of the first measurement result, refer to related the descriptions of step S60205. Details are not described herein again.

S60234: The first DU network element sends a first measurement result of the first sensing signal to the first CU network element. Correspondingly, the first CU network element receives the first measurement result of the first sensing signal from the first DU network element.

Optionally, the first DU network element may further send at least one of position information or time information of the first DU network element to the first CU network element. At least one of the position information or the time information of the first DU network element is used to determine the sensing result in the signal coverage of the first sensing signal.

For example, when the first measurement result includes the feature information of the first echo signal, the first CU network element may determine, based on the first measurement result and at least one of the position information or the time information of the first DU network element, the feature information respectively corresponding to the at least one point/target object. In this way, the sensing result in the signal coverage of the first sensing signal is determined based on the feature information respectively corresponding to the at least one point/target object.

It should be noted that, in FIG. 19, one second DU network element is used as an example to describe interaction between the first CU network element and one second DU network element. The first CU network element may alternatively interact with a plurality of first DU network elements. An implementation of the interaction is the same as the implementation of the interaction between the first CU network element and one first DU network element in FIG. 19. For details, refer to the related descriptions in FIG. 19. Details are not described herein again.

Optionally, based on the embodiment in FIG. 19, the communication system may further include a collaboration device. In this case, the communication system includes the terminal device/AMF network element, the first CU network element, the first DU network element, and the collaboration device.

For example, the collaboration device may be a third radio access network device, or may be a fourth DU network element, or may be a DU network element other than the DU network element configured to measure the first sensing signal in one or more DU network elements having another part of functions of the serving radio access network device. For implementations of the third radio access network device and the fourth DU network element, refer to the related descriptions in Scenario 2. Details are not described herein again.

For example, when the collaboration device may be a DU network element other than the DU network element configured to measure the first sensing signal in the one or more DU network elements having the another part of functions of the serving radio access network device, the DU network element (namely, the first DU network element in FIG. 19) configured to measure the first sensing signal in FIG. 19 may be referred to as a first DU network element #1, and the collaboration device is referred to as a first DU network element #2.

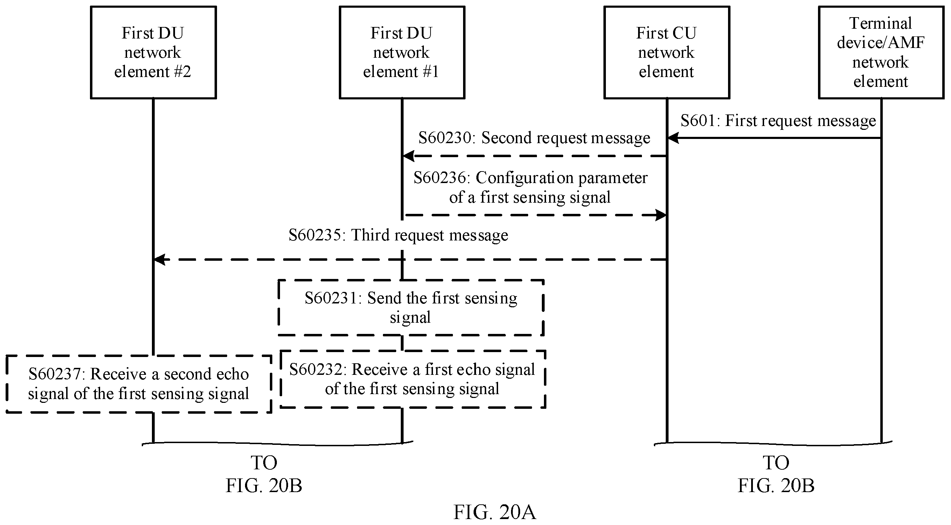

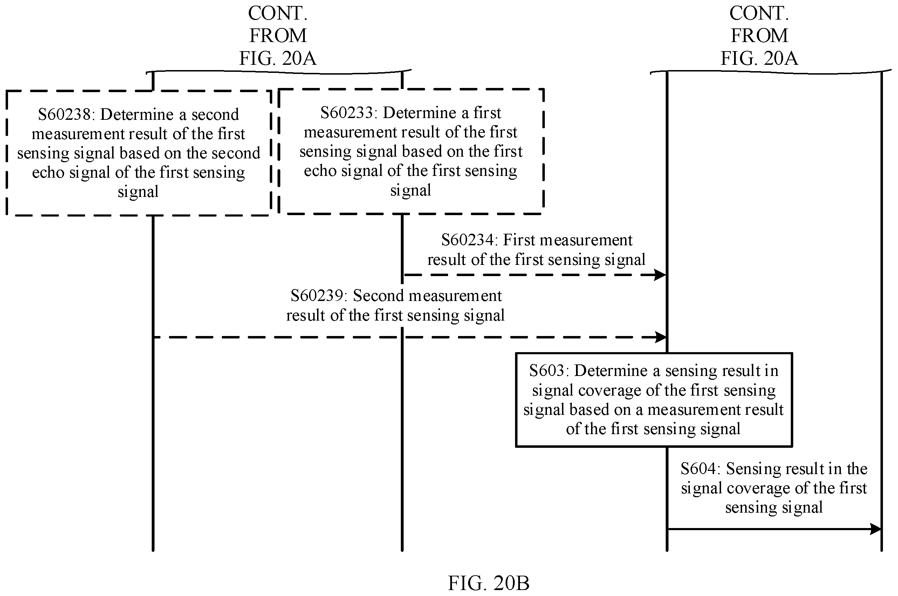

Optionally, before step S60231, as shown in FIG. 20A and FIG. 20B, the communication method may further include the following steps.

S60235: The first CU network element sends a third request message to the first DU network element #2. Correspondingly, the first DU network element #2 receives the third request message from the first CU network element.

For example, an implementation of the third request message is similar to the implementation of the third request message in step S60217. For details, refer to the related descriptions of step S60217. For a manner in which the first CU network element determines a quantity of collaboration devices, refer to the manner in which the first CU network element determines the quantity of collaboration devices in step S60217. Details are not described herein again. For example, when the configuration parameter of the first sensing signal in the third request message is from the first DU network element #1, before step S60235, the communication method may further include step S60236: The first DU network element #1 sends the configuration parameter of the first sensing signal to the first CU network element. Correspondingly, the first CU network element receives the configuration parameter of the first sensing signal from the first DU network element #1. For a process in which the first DU network element #1 determines the configuration parameter of the first sensing signal, refer to the process in which the second DU network element determines the configuration parameter of the first sensing signal in FIG. 15A and FIG. 15B. Details are not described herein again.

In an example, at least one of the position information or the time information of the first DU network element #1 is carried in the third request information. For example, the third request message indicates/includes at least one of the position information or the time information of the first DU network element #1, and at least one of the position information or the time information of the first DU network element #1 is used to determine a second measurement result.

In another example, at least one of the position information or the time information of the first DU network element #1 may be carried in information other than the third request message.

For example, in this example, an implementation of the information used to carry at least one of the position information or the time information of the first DU network element #1 is the same as the implementation of the information used to carry at least one of the position information or the time information of the measurement device in Scenario 1. For details, refer to the related descriptions in Scenario 1. Details are not described herein again.

S60237: The first DU network element #2 receives a second echo signal of the first sensing signal.

For example, the first DU network element #2 may receive the second echo signal of the first sensing signal on the resource configuration indicated by the configuration parameter of the first sensing signal.

For example, the second echo signal of the first sensing signal may be understood as a first sensing signal that is received by the first DU network element #2 and that is reflected or refracted by an object in the signal coverage of the first sensing signal.

In an example, when the first DU network element #2 receives the second echo signal on the resource configuration indicated by the configuration parameter of the first sensing signal, the first DU network element #2 may perform the following steps.

S60238: The first DU network element #2 determines a second measurement result of the first sensing signal based on the second echo signal of the first sensing signal. The second measurement result is used to determine the sensing result of the terminal device at the target point.

For example, the second measurement result includes a feature signal of the second echo signal, or the second measurement result includes feature information that respectively corresponds to the at least one point and that is determined based on the second echo signal, or the second measurement result includes feature information that respectively corresponds to at least one target object and that is determined based on the second echo signal.

S60239: The first DU network element #2 sends the second measurement result of the first sensing signal to the first CU network element. Correspondingly, the first CU network element receives the second measurement result of the first sensing signal from the first DU network element #2.

Optionally, the first DU network element #2 may further send at least one of position information or time information of the first DU network element #2 to the first CU network element. At least one of the position information or the time information of the first DU network element #2 is used to determine the sensing result in the signal coverage of the first sensing signal.

For example, when the second measurement result includes the feature signal of the second echo signal, the first CU network element may process the feature signal of the second echo signal based on at least one of the position information or the time information of the first DU network element #2, to obtain the feature information respectively corresponding to the at least one point/target object. Further, the first CU network element may determine the sensing result in the signal coverage of the first sensing signal based on the feature information respectively corresponding to the at least one point/target object.

It should be noted that, in the procedure of the communication method shown in FIG. 20A and FIG. 20B, a sequence of steps S60237 to S60239 and steps S60232 to S60234 is not limited. For example, S60237 to S60239 and steps S60232 to S60234 may be simultaneously performed, or steps S60237 to S60239 may be performed before steps S60232 to S60234, or steps S60237 to S60239 may be performed after steps S60232 to S60234.

It should be noted that, in FIG. 20A and FIG. 20B, one first DU network element #2 is used as an example to describe interaction between the first CU network element and one first DU network element #2. The first CU network element may alternatively interact with a plurality of first DU network elements #2. An implementation of the interaction is the same as the implementation of the interaction between the first CU network element and one first DU network element #2 in FIG. 20A and FIG. 20B. For details, refer to the related descriptions in FIG. 20A and FIG. 20B. Details are not described herein again.

In another example, when the first DU network element #2 does not receive the second echo signal on the resource configuration indicated by the configuration parameter of the first sensing signal, the first DU network element #2 may not perform step S60239. Alternatively, the second measurement result is empty, or the second measurement result indicates that the first DU network element #2 does not receive the second echo signal.

For example, if the first CU network element does not receive the second measurement result from the first DU network element #2 in the first sensing duration, it is determined that the first DU network element #2 does not receive the second echo signal, or the first DU network element #2 does not obtain the second measurement result.

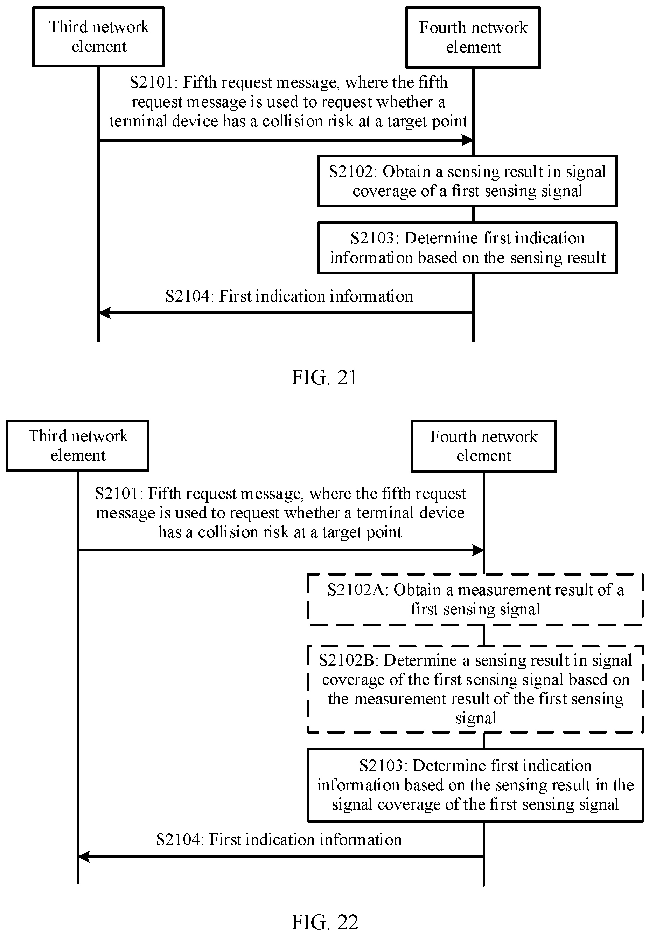

In addition to the foregoing communication method, an embodiment of this application further provides a communication method. FIG. 21 is a flowchart of the communication method according to an embodiment of this application. As shown in FIG. 21, the communication method may include the following steps.

S2101: A third network element sends a fifth request message to a fourth network element. Correspondingly, the fourth network element receives the fifth request message from the third network element. The fifth request message is used to request whether a terminal device has a collision risk at a target point, and the fifth request message includes position information of the target point.

For example, the third network element may be the terminal device, or the third network element may be an AMF network element. The fourth network element may be a serving radio access network device of the terminal device, or the fourth network element may be a first CU network element. The first CU network element is a CU network element having a part of functions of the serving radio access network device.

In an example, the fifth request message may include a movement path of the terminal device, and the movement path includes the position information of the target point. For example, the movement path of the terminal device may be represented by a flight point list. For example, the first request message may include information about a part or all of points (namely position information and time information of the points) in the flight point list.

In another example, the movement path of the terminal device is carried in a message other than the fifth request message.

Optionally, the movement path of the terminal device may indicate at least one of a movement direction and a movement speed of a point.

Optionally, the fifth request message may further include a first threshold, and the first threshold is used to determine the first indication information.

S2102: The fourth network element obtains a sensing result in signal coverage of the first sensing signal, where the target point is located in the signal coverage of the first sensing signal.

Optionally, the sensing result includes feature information respectively corresponding to at least one sensing object. For example, the feature information of the sensing object includes at least one of position information, movement information, speed information, a size of the sensing object, and a shape of the sensing object.

S2103: The fourth network element determines the first indication information based on the sensing result, where the first indication information indicates whether the terminal device has a collision risk at the target point.

For example, the fourth network element may determine a collision risk monitoring range based on the first threshold. For example, the collision risk monitoring range may be an area that uses the target point as a center and uses the first threshold as a radius.

Optionally, the fourth network element may determine, based on the sensing result, position information of each sensing object in the at least one sensing object at a moment at which the terminal device is located at the target point, and may further determine at least one of a movement direction and a movement speed of each sensing object at the moment at which the terminal device is located at the target point.

In an example, the fourth network element determines the first indication information based on the position information of the sensing object at the moment at which the terminal device is located at the target point.

For example, when the sensing object is located in the collision risk monitoring range at the moment at which the terminal device is located at the target point, the first indication information indicates that the terminal device has a collision risk at the target point. When the sensing object is located outside the collision risk monitoring range at the moment at which the terminal device is located at the target point, the first indication information indicates that the terminal device has no collision risk at the target point.

In an example, the fourth network element determines the first indication information based on the position information, the movement direction, and the movement speed of the sensing object at the moment at which the terminal device is located at the target point.

For example, when the sensing object is located outside the collision risk monitoring range at the moment at which the terminal device is located at the target point, the first indication information indicates that the terminal device has no collision risk at the target point. When the sensing object is located in the collision risk monitoring range at the moment at which the terminal device is located at the target point, the fourth network element determines, based on the movement direction and the movement speed of the sensing object, whether the sensing object gradually approaches the target point, for example, the sensing object moves toward the target point, or the sensing object moves away from the target point. If the sensing object gradually approaches the target point, the first indication information indicates that the terminal device has a collision risk at the target point. If the sensing object gradually moves away from the target point, the first indication information indicates that the terminal device has no collision risk at the target point.

S2104: The fourth network element sends the first indication information to the third network element. Correspondingly, the third network element receives the first indication information from the fourth network element.

For example, when the first indication information indicates that the terminal device has a collision risk at the target point, the first indication information may further indicate feature information of a sensing object that has the collision risk with the terminal device at the target point.

According to the communication method provided in this embodiment of this application, the fourth network element can learn, based on the position information of the target point, a sensing result of an area (namely, the signal coverage of the first sensing signal) in which the target point is located, namely, an object existing in the area, and then determine a security threat at the target point based on the sensing result (for example, determine whether the terminal device has a collision risk at the target point). It may be understood that the sensing result of the area in which the target point is located includes a result of sensing all objects existing in the area. In comparison with a solution in which an object having a PC5 communication function is determined through a PC5 communication technology, more objects can be learned. Further, the security threat at the target point can be determined based on more objects, thereby improving precision of the determined security threat at the target point (for example, precision of a collision risk).

The foregoing is overall descriptions of the communication method provided in embodiments of this application. The following describes in detail the sensing result in the signal coverage of the first sensing signal in the foregoing embodiments. For example, obtaining the sensing result in the signal coverage of the first sensing signal may be implemented based on the following two cases.

Case 1: The fourth network element determines a measurement result of the first sensing signal, to determine the sensing result in the signal coverage of the first sensing signal. For example, in Case 1, as shown in FIG. 22, step S2102 may be replaced with steps S2102A and S2102B.

S2102A: The fourth network element obtains the measurement result of the first sensing signal.

In an example, the first radio access network device may determine, based on an echo signal corresponding to the first sensing signal, feature information of the echo signal. In this case, the first measurement result includes the feature information of the echo signal.

In another example, the measurement result of the first sensing signal includes feature information respectively corresponding to at least one point. The feature information of the point includes at least one of position information, a movement direction, and a movement speed.

Optionally, in this example, each point in the at least one point is located in the signal coverage of the first sensing signal.

In another example, the measurement result of the first sensing signal includes feature information respectively corresponding to at least one target object. The feature information respectively corresponding to the target object is determined based on the feature information respectively corresponding to the at least one point.

Optionally, each target object in the at least one target object is located in the signal coverage of the first sensing signal.

Optionally, the feature information respectively corresponding to the target object includes at least one of position information, movement information, speed information, a size of the target object, and a shape of the target object. The movement information of the target object is movement information of at least one point corresponding to the target object, and the speed information of the target object is speed information of the at least one point corresponding to the target object. The at least one point corresponding to the target object corresponds to the same movement information, and the at least one point corresponding to the target object corresponds to the same speed information.

S2102B: The fourth network element determines the sensing result in the signal coverage of the first sensing signal based on the measurement result of the first sensing signal.

In an example, when the measurement result of the first sensing signal includes the feature information respectively corresponding to the at least one point, determining the sensing result in the signal coverage of the first sensing signal based on the measurement result of the first sensing signal includes: determining, based on the feature information respectively corresponding to the at least one point, the feature information respectively corresponding to the at least one target object; determining, based on the feature information respectively corresponding to the at least one target object, a type of each target object in the at least one target object, to obtain the at least one sensing object, where the sensing object is in a one-to-one correspondence with the target object; and determining the feature information of the target object as the feature information of the sensing object. In other words, the sensing object is a target object with an identifier.

In another example, when the measurement result of the first sensing signal includes the feature information respectively corresponding to the at least one target object, determining the sensing result in the signal coverage of the first sensing signal based on the measurement result of the first sensing signal includes: determining a type of each target object in the at least one target object based on the feature information respectively corresponding to the at least one target object, to obtain the at least one sensing object, where the sensing object is in a one-to-one correspondence with the target object; and determining the feature information of the target object as the feature information of the sensing object.

With reference to the foregoing two examples, for example, after determining the at least one target object, the fourth network element determines an actual object (namely, the type of the target object) of each target object based on the feature information of the target object. For example, it is determined that the target object #1 is a bird. In this case, the identifier of the target object #1 indicates the bird. It is determined that the target object #2 is a kite. In this case, an identifier of the target object #2 indicates the kite.

Optionally, the sensing result includes feature information respectively corresponding to at least one sensing object. For example, the feature information of the sensing object includes the feature information of the target object and a type of the target object.

In another example, when the first measurement result includes the feature information of the echo signal, the fourth network element may determine, based on the feature information of the echo signal and at least one of time information or position information of a measurement device/collaboration device, the feature information respectively corresponding to the at least one point, and further determine the sensing result in the signal coverage of the first sensing signal based on the feature information respectively corresponding to the at least one point.

For example, the following describes in detail a process in which the fourth network element obtains the measurement result of the first sensing signal.

In a possible implementation, the fourth network element may autonomously determine the measurement result of the first sensing signal. In this possible implementation, the fourth network element is a serving radio access network device.

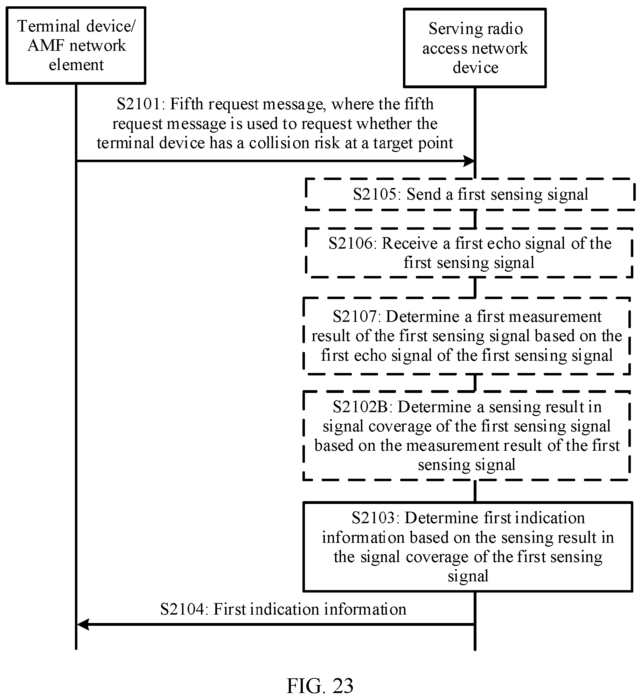

For example, in this possible implementation, as shown in FIG. 23, step S2102A may be implemented based on the following steps S2105 to S2107. In other words, step S2102A may be replaced with steps S2105 to S2107.

S2105 to S2107: Steps S2105 to S2107 are the same as steps S60223 to A60225. For details, refer to the related descriptions of steps S60223 to A60225. Details are not described herein again. In this case, the measurement result of the first sensing signal includes a first measurement result.

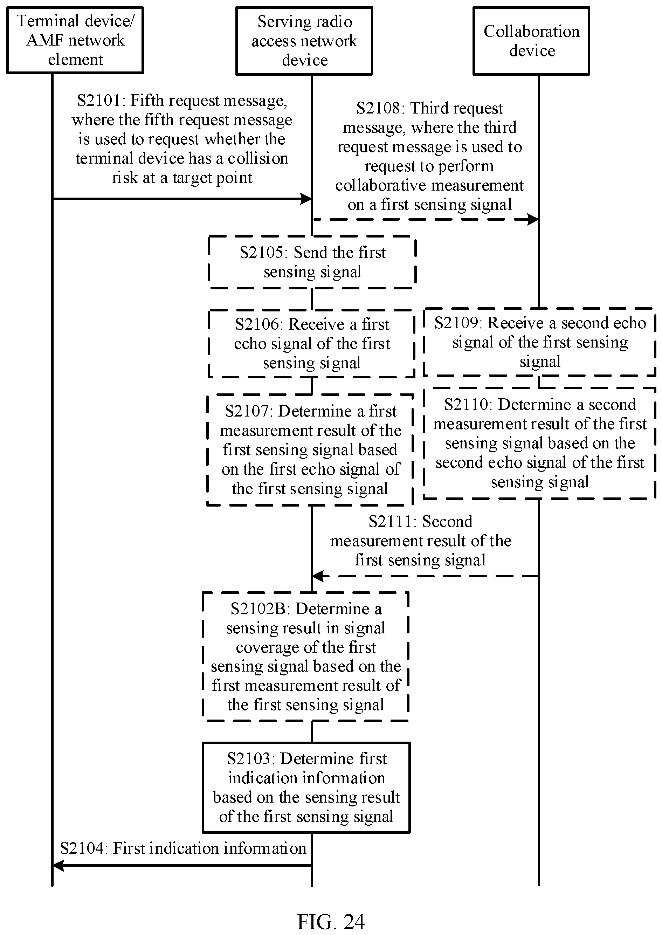

Optionally, in this possible implementation, as shown in FIG. 24, the communication method may further include the following steps.

S2108 to S2111: Steps S2108 to S2111 are the same as steps S60226 to S60229. For details, refer to the related descriptions of steps S60226 to S60229. Details are not described herein again. In this case, the measurement result of the first sensing signal includes a first measurement result and a second measurement result.

In another possible implementation, the fourth network element may receive a measurement result of the first sensing signal from a fifth network element. In this possible implementation, the fourth network element is a first CU network element.

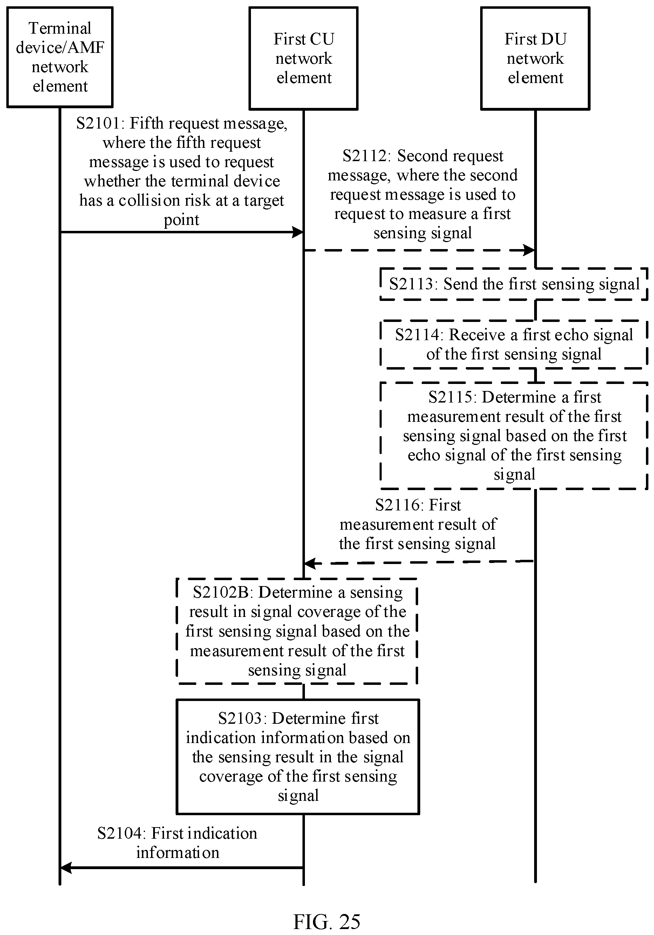

For example, in this possible implementation, as shown in FIG. 25, step S2102A may be implemented based on the following steps S2112 to S2116. In other words, step S2102A may be replaced with steps S2112 to S2116.

S2112 to S2116: Steps S2112 to S2116 are the same as steps S60230 to A60234. For details, refer to the related descriptions of steps S60230 to A60234. Details are not described herein again. In this case, the measurement result of the first sensing signal includes a first measurement result.

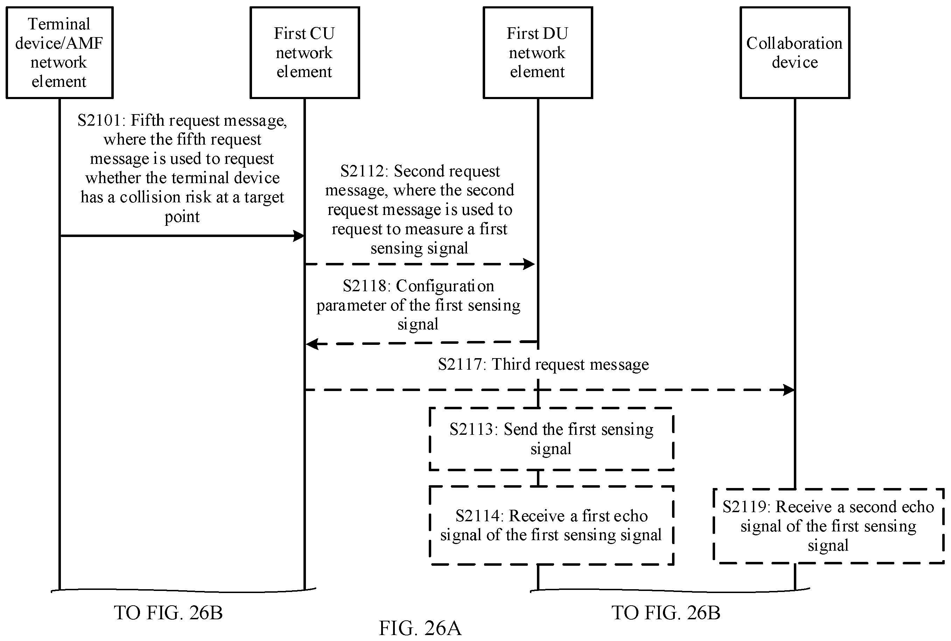

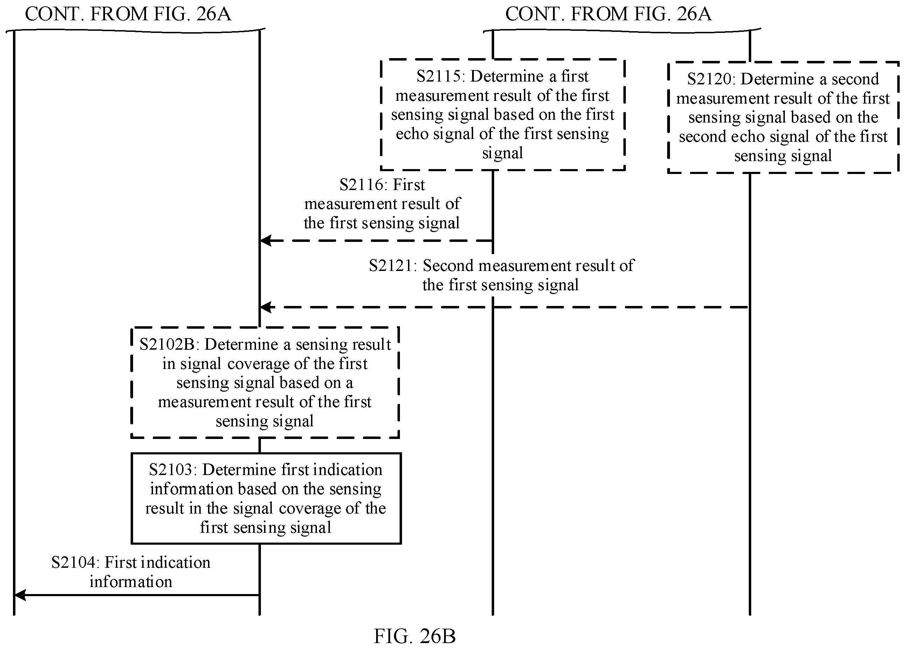

Optionally, in this possible implementation, as shown in FIG. 26A and FIG. 26B, the communication method may further include the following steps.

S2117 to S2121: Steps S2117 to S2121 are the same as steps S60235 to S60239. For details, refer to the related descriptions of steps S60235 to S60239. Details are not described herein again. In this case, the measurement result of the first sensing signal includes a first measurement result and a second measurement result.

Case 2: The fourth network element determines the sensing result in the signal coverage of the first sensing signal. In Case 2, the fourth network element is a serving radio access network device. In this case, the serving radio access network device may receive the sensing result in the signal coverage of the first sensing signal from the fifth network element. The fifth network element is a network element having a sensing function in a core network. The fifth network element may alternatively be understood as the first network element in Scenario 1.

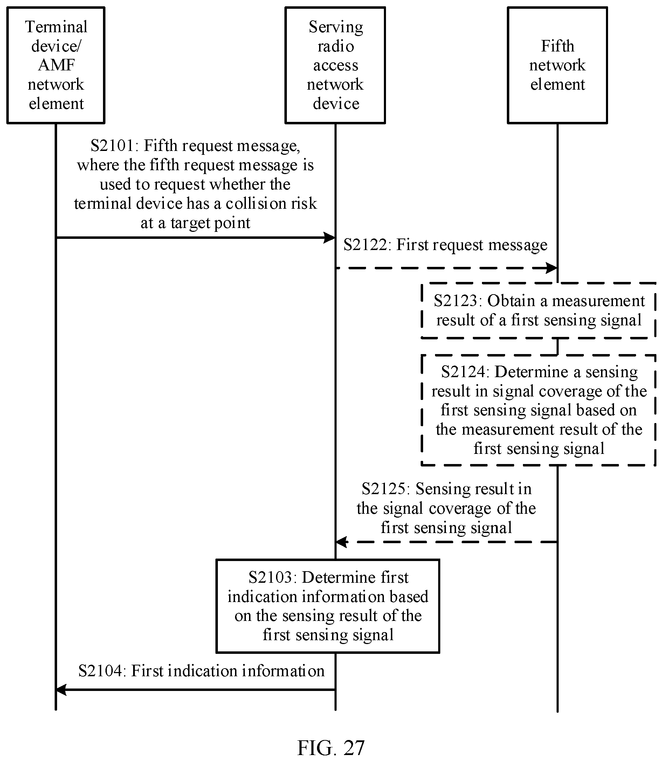

For example, as shown in FIG. 27, step S2102 may be replaced with steps S2122 to S2125.

S2122: The serving radio access network device sends a first request message to the fifth network element. Correspondingly, the fifth network element receives the first request message from the serving radio access network device. The first request message is used to request a sensing result of the terminal device at the target point, and the first request message includes the position information of the target point.

For example, an implementation of the first request message is the same as the implementation of the first request message in step S601. For details, refer to the related descriptions of step S601. Details are not described herein again.

S2123: The fifth network element obtains the measurement result of the first sensing signal.

For example, a process in which the fifth network element obtains the measurement result of the first sensing signal is the same as the process in which the first network element obtains the measurement result of the first sensing signal in Scenario 1. For details, refer to the related descriptions of the first network element in Scenario 1. Details are not described herein again.

S2124: The fifth network element determines the sensing result in the signal coverage of the first sensing signal based on the measurement result of the first sensing signal.

For example, an implementation in which the fifth network element determines the sensing result in the signal coverage of the first sensing signal is similar to the implementation in which the serving radio access network device determines the sensing result in the signal coverage of the first sensing signal in step S2102B. For details, refer to the related descriptions of step S2108. Details are not described herein again.

S2125: The fifth network element sends the sensing result in the signal coverage of the first sensing signal to the serving radio access network device. Correspondingly, the serving radio access network device receives the serving radio access network device from the fifth network element.

Optionally, in step S2122 and step S2125, the serving radio access network device may directly communicate with the fifth network element. Alternatively, the serving radio access network device may communicate with the fifth network element through an AMF network element. For a process in which the serving radio access network device communicates with the fifth network element through the AMF network element, refer to the process in which the radio access network device communicates with the first network element through the AMF network element in FIG. 8. In other words, in this case, the fifth network element may be replaced with the first network element in FIG. 8. Details are not described herein again.

Based on Case 2, the fourth network element can send the first request message to the fifth network element based on the position information of the target point, so that the fifth network element can measure the area in which the target point is located (namely, the signal coverage of the first sensing signal), and obtain the sensing result in the signal coverage of the first sensing signal through sensing, to reduce computational power of the fourth network element. In addition, because the fifth network element is a network element having a sensing function in the core network, compared with the sensing result that is in the signal coverage of the first sensing signal and that is obtained by the fourth network element through measurement and sensing, the sensing result that is in the signal coverage of the first sensing signal and that is determined by the fifth network element is more accurate. This improves precision of the determined security threat at the target point (for example, the precision of the collision risk).

It may be understood that, in the foregoing embodiments, the method and/or the step implemented by any one of the first network element, the device configured to measure the first sensing signal, the device configured to perform collaborative measurement on the first sensing signal, the fourth network element, and the first CU network element may alternatively be performed by a component (for example, a processor, a chip, a chip system, a circuit, a logical module, or software like a chip or a circuit) that may be used in any one of the first network element, the device configured to measure the first sensing signal, the device configured to perform collaborative measurement on the first sensing signal, the fourth network element, or the first CU network element.

The foregoing mainly describes the solutions provided in this application. Correspondingly, this application further provides a communication apparatus, and the communication apparatus is configured to implement the foregoing methods.

The communication apparatus may be any one of the first network element, the device configured to measure the first sensing signal, the device configured to perform collaborative measurement on the first sensing signal, the fourth network element, and the first CU network element in the foregoing method embodiments, or an apparatus including any one of the first network element, the device configured to measure the first sensing signal, the device configured to perform collaborative measurement on the first sensing signal, the fourth network element, and the first CU network element, or a component, for example, a chip or a chip system, that may be used in any one of the first network element, the device configured to measure the first sensing signal, the device configured to perform collaborative measurement on the first sensing signal, the fourth network element, and the first CU network element.

It may be understood that, to implement the foregoing functions, the communication apparatus includes a hardware structure and/or a software module for performing a corresponding function. A person skilled in the art should be easily aware that, in combination with units and algorithm steps of the examples described in embodiments disclosed in this specification, this application can be implemented by hardware or a combination of hardware and computer software. Whether a function is performed by hardware or computer software driving hardware depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, functional modules may be obtained through division based on corresponding functions, or two or more functions may be integrated into one processing module. The integrated module may be implemented in a form of hardware, or may be implemented in a form of a software functional module. It should be noted that, in embodiments of this application, module division is an example, and is merely logical function division. In an actual implementation, another division manner may be used.

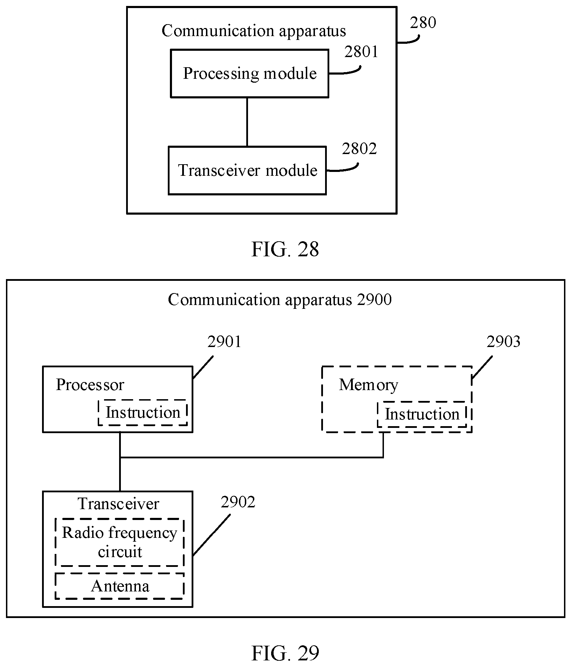

FIG. 28 is a diagram of a structure of a communication apparatus 280. The communication apparatus 280 includes a processing module 2801 and a transceiver module 2802. The communication apparatus 280 may be configured to implement a function of any one of the first network element, the device configured to measure the first sensing signal, the device configured to perform collaborative measurement on the first sensing signal, the fourth network element, and the first CU network element.

In some embodiments, the communication apparatus 280 may further include a storage module (not shown in FIG. 28), configured to store program instructions and data.

In some embodiments, the transceiver module 2802 may also be referred to as a transceiver unit, and is configured to implement a sending function and/or a receiving function. The transceiver module 2802 may include a transceiver circuit, a transceiver machine, a transceiver, or a communication interface.

In some embodiments, the transceiver module 2802 may include a receiving module and a sending module, which are respectively configured to perform receiving and sending steps performed by any one of the first network element, the device configured to measure the first sensing signal, the device configured to perform collaborative measurement on the first sensing signal, the fourth network element, and the first CU network element in the foregoing method embodiments, and/or another process used to support the technology described in this specification. The processing module 2801 may be configured to perform processing (for example, determining or generating) steps performed by any one of the first network element, the device configured to measure the first sensing signal, the device configured to perform collaborative measurement on the first sensing signal, the fourth network element, and the first CU network element in the foregoing method embodiments, and/or another process used to support the technology described in this specification.

When the communication apparatus 280 is configured to implement a function of the first network element:
In some embodiments, the transceiver module 2802 is configured to receive a first request message, where the first request message is used to request a sensing result of a terminal device at a target point, and the first request message includes position information of the target point; the processing module 2801 is configured to obtain a measurement result of a first sensing signal, where the target point is located within signal coverage of the first sensing signal; the processing module 2801 is further configured to determine a sensing result in the signal coverage of the first sensing signal based on the measurement result of the first sensing signal; and the transceiver module 2802 is further configured to send the sensing result in the signal coverage of the first sensing signal.

Optionally, the transceiver module 2802 is further configured to: receive the first request message from a serving radio access network device of the terminal device; or receive the first request message from an AMF network element; or receive the first request message from a UTM network element.

Optionally, the transceiver module 2802 is further configured to receive the first request message from the terminal device, or receive the first request message from an AMF network element.

When the communication apparatus 280 is configured to implement a function of the fourth network element:
In some embodiments, the transceiver module 2802 is configured to receive a fifth request message, where the fifth request message is used to request whether a terminal device has a collision risk at a target point, and the fifth request message includes position information of the target point; the processing module 2801 is configured to obtain a sensing result in signal coverage of a first sensing signal, where the target point is located in the signal coverage of the first sensing signal; the processing module 2801 is further configured to determine first indication information based on the sensing result in the signal coverage of the first sensing signal, where the first indication information indicates whether the terminal device has a collision risk at the target point; and the transceiver module 2802 is further configured to send the first indication information.

Optionally, the transceiver module 2802 is further configured to: send a first request message, where the first request message is used to request a sensing result of the terminal device at the target point, the first request message includes the position information of the target point, and a fifth network element is a network element having a sensing function in a core network; and receive a measurement result of the first sensing signal from the fifth network element; and the processing module 2801 is further configured to determine the sensing result in the signal coverage of the first sensing signal based on the measurement result of the first sensing signal.

Optionally, the processing module 2801 is further configured to: obtain the measurement result of the first sensing signal; and determine the sensing result in the signal coverage of the first sensing signal based on the measurement result of the first sensing signal.

With reference to the foregoing two embodiments, optionally, the transceiver module 2802 is further configured to: send the first sensing signal; and receive a first echo signal of the first sensing signal; and the processing module 2801 is further configured to determine a first measurement result of the first sensing signal based on the first echo signal of the first sensing signal, where the measurement result of the first sensing signal includes the first measurement result of the first sensing signal.

With reference to the foregoing two embodiments, optionally, the transceiver module 2802 is further configured to: send a second request message, where the second request message is used to request to measure the first sensing signal, and the second request message includes the position information of the target point; and receive the measurement result of the first sensing signal.

With reference to the foregoing two embodiments, optionally, the transceiver module 2802 is further configured to: send a third request message, where the third request message is used to request to perform collaborative measurement on the first sensing signal, the third request message includes a configuration parameter of the first sensing signal, and the configuration parameter includes at least one of a message identifier ID, a resource configuration, a frequency domain bandwidth, a time domain periodicity, transmit power, or a signal waveform of the first sensing signal; and receive a second measurement result of the first sensing signal, where the measurement result of the first sensing signal includes the second measurement result.

With reference to the foregoing two embodiments, optionally, the transceiver module 2802 is further configured to receive at least one of position information or time information of a device configured to measure the first sensing signal, where at least one of the position information or the time information of the device configured to measure the first sensing signal is used to determine the second measurement result, and the third request message indicates at least one of the position information or the time information of the device configured to measure the first sensing signal.

With reference to the foregoing two embodiments, optionally, the transceiver module 2802 is further configured to: receive the first measurement result; and receive at least one of the position information or the time information of the device configured to measure the first sensing signal, where at least one of the position information or the time information of the device configured to measure the first sensing signal is used to determine the sensing result in the signal coverage of the first sensing signal.

When the communication apparatus 280 is configured to implement a function of the device configured to measure the first sensing signal:
In some embodiments, the transceiver module 2802 is configured to receive a second request message, where the second request message is used to request to measure a first sensing signal, the second request message includes position information of a terminal device at a target point, and the target point is located within signal coverage of the first sensing signal; the transceiver module 2802 is further configured to send the first sensing signal; the transceiver module 2802 is further configured to receive a first echo signal of the first sensing signal; the processing module 2801 is configured to determine a first measurement result of the first sensing signal based on the first echo signal of the first sensing signal; and the transceiver module 2802 is further configured to send the first measurement result of the first sensing signal, where the first measurement result is used to determine a sensing result of the terminal device at the target point.

Optionally, the transceiver module 2802 is further configured to send a measurement result of the first sensing signal, where the measurement result of the first sensing signal includes the first measurement result and the second measurement result.

Optionally, the transceiver module 2802 is further configured to send a configuration parameter of the first sensing signal.

With reference to the foregoing three embodiments, optionally, the transceiver module 2802 is further configured to receive at least one of position information or time information of a device configured to perform collaborative measurement on the first sensing signal, where at least one of the position information or the time information of the device configured to perform collaborative measurement on the first sensing signal is used to determine the sensing result in a signal coverage of the first sensing signal.

When the communication apparatus 280 is configured to implement a function of the device configured to perform collaborative measurement on the first sensing signal:
In some embodiments, the transceiver module 2802 is configured to receive a third request message, where the third request message is used to request to perform collaborative measurement on a first sensing signal, the third request message includes a configuration parameter of the first sensing signal, and the configuration parameter includes at least one of a message identifier ID, a resource configuration, a frequency domain bandwidth, a time domain periodicity, transmit power, or a signal waveform of the first sensing signal; the transceiver module 2802 is further configured to receive a second echo signal of the first sensing signal; the processing module 2801 is configured to determine a second measurement result of the first sensing signal based on the second echo signal of the first sensing signal; and the transceiver module 2802 is further configured to send the second measurement result, where the second measurement result is used to determine a sensing result of a terminal device at a target point, and the target point is located within signal coverage of the first sensing signal.

When the communication apparatus 280 is configured to implement a function of the first CU network element:
In some embodiments, the transceiver module 2802 is configured to receive a second request message, where the second request message is used to request to measure a first sensing signal, the second request message includes position information of a terminal device at a target point, and the target point is in signal coverage of the first sensing signal; the transceiver module 2802 is further configured to send a fourth request message, where the fourth request message is used to request to measure the first sensing signal, and the second request message includes the position information of the target point; the transceiver module 2802 is further configured to receive a first measurement result of the first sensing signal; and the transceiver module 2802 is further configured to send the first measurement result, where the first measurement result is used to determine a sensing result of the terminal device at the target point.

Optionally, the transceiver module 2802 is further configured to receive at least one of time information or position information of a device configured to perform collaborative measurement on the first sensing signal, where at least one of the time information or the position information of the device configured to perform collaborative measurement on the first sensing signal is used to determine a sensing result in the signal coverage of the first sensing signal; and the transceiver module 2802 is further configured to send at least one of the time information or the position information of the device configured to perform collaborative measurement on the first sensing signal.

Optionally, the transceiver module 2802 is further configured to send a measurement result of the first sensing signal, where the measurement result of the first sensing signal includes the first measurement result and a second measurement result.

With reference to the foregoing five embodiments, optionally, the transceiver module 2802 is further configured to send at least one of time information or position information of a device configured to measure the first sensing signal, where at least one of the time information or the position information of the device configured to measure the first sensing signal is used to determine the sensing result in the signal coverage of the first sensing signal.

With reference to the third embodiment and the fifth embodiment, optionally, the transceiver module 2802 is further configured to send a third request message, where the third request message is used to request to perform collaborative measurement on the first sensing signal, the third request message includes a configuration parameter of the first sensing signal, and the configuration parameter includes at least one of a message ID, a resource configuration, a frequency domain bandwidth, a time domain periodicity, transmit power, or a signal waveform of the first sensing signal; and the transceiver module 2802 is further configured to receive a second measurement result of the first sensing signal, where the second measurement result is used to determine the sensing result of the terminal device at the target point.

With reference to the first embodiment, the second embodiment, and the fifth embodiment, optionally, the transceiver module 2802 is further configured to receive the configuration parameter of the first sensing signal.

All related content of the steps in the foregoing method embodiments may be cited in function descriptions of the corresponding functional modules. Details are not described herein again.

In this application, the communication apparatus 280 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 280 in FIG. 28 is a chip or a chip system, a function/implementation process of the transceiver module 2802 may be implemented by an input/output interface (or a communication interface) of the chip or the chip system, and a function/implementation process of the processing module 2801 may be implemented by a processor (or a processing circuit) of the chip or the chip system.

The communication apparatus 280 provided in this embodiment may perform the foregoing methods. Therefore, for technical effect that can be achieved by the communication apparatus, refer to the foregoing method embodiments. Details are not described herein again.

In a possible product form, any one of the first network element, the device configured to measure the first sensing signal, the device configured to perform collaborative measurement on the first sensing signal, the fourth network element, and the first CU network element in embodiments of this application may alternatively be implemented by using one or more field programmable gate arrays (field programmable gate arrays, FPGAs), a programmable logic device (programmable logic device, PLD), a controller, a state machine, a logic gate, a discrete hardware component, any other appropriate circuit, or any combination of circuits that can perform the various functions described in this application.

In another possible product form, any one of the first network element, the device configured to measure the first sensing signal, the device configured to perform collaborative measurement on the first sensing signal, the fourth network element, and the first CU network element in embodiments of this application may be implemented by using a general bus architecture. For ease of description, refer to FIG. 29. FIG. 29 is a diagram of a structure of a communication apparatus 2900 according to an embodiment of this application. The communication apparatus 2900 includes a processor 2901 and a transceiver 2902. The communication apparatus 2900 may be any one of the first network element, the device configured to measure the first sensing signal, the device configured to perform collaborative measurement on the first sensing signal, the fourth network element, or the first CU network element, or a chip or a chip system thereof. FIG. 29 shows only main components in the communication apparatus 2900. In addition to the processor 2901 and the transceiver 2902, the communication apparatus may further include a memory 2903 and an input/output apparatus (not shown in the figure).

Optionally, the processor 2901 is mainly configured to: process a communication protocol and communication data, control the entire communication apparatus, execute a software program, and process data of the software program. The memory 2903 is mainly configured to store the software program and data. The transceiver 2902 may include a radio frequency circuit and an antenna. The radio frequency circuit is mainly configured to perform conversion between a baseband signal and a radio frequency signal and process the radio frequency signal. The antenna is mainly configured to receive and send a radio frequency signal in a form of an electromagnetic wave. The input/output apparatus, for example, a touchscreen, a display, or a keyboard, is mainly configured to receive data entered by a user and output data to the user.

Optionally, the processor 2901, the transceiver 2902, and the memory 2903 may be connected through a communication bus.

After the communication apparatus is powered on, the processor 2901 may read the software program in the memory 2903, interpret and execute instructions of the software program, and process the data of the software program. When data needs to be sent in a wireless manner, the processor 2901 performs baseband processing on the to-be-sent data, and outputs a baseband signal to the radio frequency circuit. The radio frequency circuit performs radio frequency processing on the baseband signal, and then sends a radio frequency signal in a form of an electromagnetic wave to the outside through the antenna. When data is sent to the communication apparatus, the radio frequency circuit receives a radio frequency signal through the antenna, converts the radio frequency signal into a baseband signal, and outputs the baseband signal to the processor 2901. The processor 2901 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in a hardware implementation, a person skilled in the art may figure out that the communication apparatus 280 may be in a form of the communication apparatus 2900 shown in FIG. 29.

In an example, a function/implementation process of the processing module 2801 in FIG. 28 may be implemented by the processor 2901 in the communication apparatus 2900 shown in FIG. 29 by invoking computer-executable instructions stored in the memory 2903. A function/implementation process of the transceiver module 2802 in FIG. 28 may be implemented by the transceiver 2902 in the communication apparatus 2900 shown in FIG. 29.

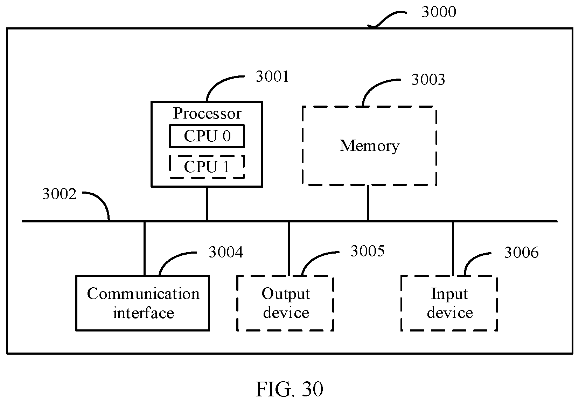

In another possible product form, any one of the first network element, the device configured to measure the first sensing signal, the device configured to perform collaborative measurement on the first sensing signal, the fourth network element, and the first CU network element in this application may use the composition structure shown in FIG. 28, or include components shown in FIG. 30. FIG. 30 is a diagram of composition of a communication apparatus 3000 according to this application. The communication apparatus 3000 may be any one of the first network element, the device configured to measure the first sensing signal, the device configured to perform collaborative measurement on the first sensing signal, the fourth network element, or the first CU network element, or a chip or a system on chip in any one of the first network element, the device configured to measure the first sensing signal, the device configured to perform collaborative measurement on the first sensing signal, the fourth network element, and the first CU network element.

As shown in FIG. 30, the communication apparatus 3000 includes at least one processor 3001 and at least one communication interface (an example in which one communication interface 3004 and one processor 3001 are included is merely used for description in FIG. 30). Optionally, the communication apparatus 3000 may further include a communication bus 3002 and a memory 3003.

The processor 3001 may be a general-purpose central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 3001 may be another apparatus having a processing function, for example, a circuit, a device, or a software module. This is not limited.

The communication bus 3002 is configured to connect different components in the communication apparatus 3000, so that the different components can communicate with each other. The communication bus 3002 may be a peripheral component interconnect (peripheral component interconnect, PCI) bus or an extended industry standard architecture (extended industry standard architecture, EISA) bus, or the like. The bus may be classified into an address bus, a data bus, a control bus, and the like. For ease of representation, only one bold line is used to represent the bus in FIG. 30, but this does not mean that there is only one bus or only one type of bus.

The communication interface 3004 is configured to communicate with another device or a communication network. For example, the communication interface 3004 may be a module, a circuit, a transceiver, or any apparatus that can implement communication. Optionally, the communication interface 3004 may alternatively be an input/output interface located in the processor 3001, and is configured to implement a signal input and a signal output of the processor.

The memory 3003 may be an apparatus having a storage function, and is configured to store instructions and/or data. The instructions may be computer programs.

For example, the memory 3003 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or the like. This is not limited.

It should be noted that the memory 3003 may be independent of the processor 3001, or may be integrated with the processor 3001. The memory 3003 may be located inside the communication apparatus 3000, or may be located outside the communication apparatus 3000. This is not limited. The processor 3001 may be configured to execute the instructions stored in the memory 3003, to implement the method provided in the following embodiments of this application.

In an optional implementation, the communication apparatus 3000 may further include an output device 3005 and an input device 3006. The output device 3005 communicates with the processor 3001, and may display information in a plurality of manners. For example, the output device 3005 may be a liquid crystal display (liquid crystal display, LCD), a light emitting diode (light emitting diode, LED) display device, a cathode ray tube (cathode ray tube, CRT) display device, or a projector (projector). The input device 3006 communicates with the processor 3001, and may receive a user input in a plurality of manners. For example, the input device 3006 may be a mouse, a keyboard, a touchscreen device, or a sensor device.

In some embodiments, in a hardware implementation, a person skilled in the art may figure out that the communication apparatus 280 may be in a form of the communication apparatus 3000 shown in FIG. 30.

In an example, a function/implementation process of the processing module 2801 in FIG. 28 may be implemented by the processor 3001 in the communication apparatus 3000 shown in FIG. 30 by invoking computer-executable instructions stored in the memory 3003. A function/implementation process of the transceiver module 2802 in FIG. 28 may be implemented by the communication interface 3004 in the communication apparatus 3000 shown in FIG. 30.

It should be noted that the structure shown in FIG. 30 does not constitute a specific limitation on any one of the first network element, the device configured to measure the first sensing signal, the device configured to perform collaborative measurement on the first sensing signal, the fourth network element, and the first CU network element. For example, in some other embodiments of this application, any one of the first network element, the device configured to measure the first sensing signal, the device configured to perform collaborative measurement on the first sensing signal, the fourth network element, and the first CU network element may include more or fewer components than those shown in the figure, or some components may be combined, or some components may be split, or different component arrangements may be used. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the memory may not be in the communication apparatus.

In another possible implementation, the communication apparatus further includes an interface circuit. The interface circuit is a code/data read/write interface circuit, and the interface circuit is configured to receive computer-executable instructions (where the computer-executable instructions are stored in the memory, and may be directly read from the memory, or may be read via another component) and send the computer-executable instructions to the processor.

In another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete device. This is not specifically limited in embodiments of this application.

This application further provides a computer-readable storage medium. The computer-readable storage medium stores a computer program or instructions. When the computer program or instructions are executed by a computer, functions in any one of the foregoing method embodiments are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiments. Details are not described herein again.

It may be understood that the system, apparatuses, and methods described in this application may alternatively be implemented in another manner. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and may be located in one position, or may be distributed on a plurality of network units. Components displayed as units may be or may be not physical units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by software, hardware, firmware, or any combination thereof. When a software program is used for implementation, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the protection scope of this application. Correspondingly, the specification and accompanying drawings are merely example descriptions of this application defined by the appended claims, and are considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of protection defined by the claims of this application and their equivalent technologies.

## Claims

1. A communication method, wherein the method comprises:
receiving a first request message, wherein the first request message is used to request a sensing result of a terminal device at a target point, and the first request message comprises position information of the target point;
obtaining a measurement result of a first sensing signal, wherein the target point is located within signal coverage of the first sensing signal;
determining a sensing result in the signal coverage of the first sensing signal based on the measurement result of the first sensing signal; and
sending the sensing result in the signal coverage of the first sensing signal.

2. The method according to claim 1, wherein the obtaining the measurement result of the first sensing signal comprises:
sending a second request message, wherein the second request message is used to request to measure the first sensing signal, and the second request message comprises the position information of the target point; and
receiving the measurement result of the first sensing signal.

3. The method according to claim 2, wherein the method further comprises:
receiving at least one of position information or time information of a device configured to measure the first sensing signal, wherein at least one of the position information or the time information of the device configured to measure the first sensing signal is used to determine the sensing result in the signal coverage of the first sensing signal; and
sending at least one of the position information or the time information of the device configured to measure the first sensing signal.

4. The method according to claim 2 or 3, wherein the second request message further comprises at least one of a configuration parameter, first sensing duration, or first sensing quality of service QoS of the first sensing signal, wherein
the configuration parameter comprises at least one of a message identifier ID, a resource configuration, a frequency domain bandwidth, a time domain periodicity, transmit power, or a signal waveform of the first sensing signal;
the first sensing duration is duration from a moment at which the second request message is received to a moment at which the measurement result of the first sensing signal is sent; and
the first sensing QoS is related to at least one of a quantity of devices configured to perform collaborative measurement on the first sensing signal or the configuration parameter of the first sensing signal.

5. The method according to any one of claims 2 to 4, wherein the measurement result of the first sensing signal comprises a first measurement result, and the first measurement result is a measurement result obtained by measuring the signal coverage of the first sensing signal by the device configured to measure the first sensing signal.

6. The method according to claim 1, wherein the obtaining the measurement result of the first sensing signal comprises:
sending the first sensing signal;
receiving a first echo signal of the first sensing signal; and
determining a first measurement result of the first sensing signal based on the first echo signal of the first sensing signal, wherein the measurement result of the first sensing signal comprises the first measurement result of the first sensing signal.

7. The method according to claim 5 or 6, wherein the method further comprises:
sending a third request message, wherein the third request message is used to request to perform collaborative measurement on the first sensing signal, the third request message comprises the configuration parameter of the first sensing signal, and the configuration parameter comprises at least one of the message identifier ID, the resource configuration, the frequency domain bandwidth, the time domain periodicity, the transmit power, or the signal waveform of the first sensing signal; and
receiving a second measurement result of the first sensing signal, wherein the measurement result of the first sensing signal comprises the second measurement result.

8. The method according to claim 7, wherein the third request message indicates at least one of the position information or the time information of the device configured to measure the first sensing signal, and at least one of the position information or the time information of the device configured to measure the first sensing signal is used to determine the second measurement result.

9. The method according to claim 7, wherein
before the sending the third request message, the method further comprises:
receiving the configuration parameter of the first sensing signal.

10. The method according to claim 9, wherein before the sending the third request message, the method further comprises:
receiving at least one of the position information or the time information of the device configured to measure the first sensing signal, wherein at least one of the position information or the time information of the device configured to measure the first sensing signal is used to determine the second measurement result, wherein
the third request message indicates at least one of the position information or the time information of the device configured to measure the first sensing signal.

11. The method according to any one of claims 8 to 10, wherein the method further comprises:
receiving at least one of position information or time information of the device configured to perform collaborative measurement on the first sensing signal, wherein at least one of the position information or the time information of the device configured to perform collaborative measurement on the first sensing signal is used to determine the sensing result in the signal coverage of the first sensing signal.

12. The method according to any one of claims 7 to 11, wherein the measurement result of the first sensing signal is a measurement result obtained by performing fitting on the first measurement result and the second measurement result.

13. The method according to any one of claims 1 to 12, wherein the measurement result of the first sensing signal comprises feature information respectively corresponding to at least one point, and the feature information comprises at least one of position information, a movement direction, and a movement speed; and correspondingly, the sensing result comprises feature information respectively corresponding to at least one sensing object.

14. The method according to any one of claims 1 to 13, wherein receiving the first request message comprises:
receiving the first request message from the terminal device; or
receiving the first request message from an access and mobility management AMF network element.

15. The method according to any one of claims 1 to 13, wherein receiving the first request message comprises:
receiving the first request message from a serving radio access network device of the terminal device; or
receiving the first request message from an AMF network element; or
receiving the first request message from an uncrewed aerial system traffic management UTM network element.

16. The method according to claim 15, wherein the first request message further comprises second sensing QoS, the second sensing QoS is related to at least one of a quantity of devices configured to measure the first sensing signal or the configuration parameter of the first sensing signal, and the configuration parameter comprises at least one of the message ID, the resource configuration, the frequency domain bandwidth, the time domain periodicity, the transmit power, or the signal waveform for sending the first sensing signal.

17. The method according to any one of claims 1 to 16, wherein the first request message comprises a movement path of the terminal device, and the movement path comprises the position information of the target point.

18. A communication method, wherein the method comprises:
receiving a second request message, wherein the second request message is used to request to measure a first sensing signal, the second request message comprises position information of a terminal device at the target point, and the target point is located within signal coverage of the first sensing signal;
sending the first sensing signal;
receiving a first echo signal of the first sensing signal;
determining a first measurement result of the first sensing signal based on the first echo signal of the first sensing signal; and
sending the first measurement result of the first sensing signal, wherein the first measurement result is used to determine a sensing result of the terminal device at the target point.

19. The method according to claim 18, wherein the method further comprises:
sending a third request message, wherein the third request message is used to request to perform collaborative measurement on the first sensing signal, the third request message comprises a configuration parameter of the first sensing signal, and the configuration parameter comprises at least one of a message identifier ID, a resource configuration, a frequency domain bandwidth, a time domain periodicity, transmit power, or a signal waveform of the first sensing signal; and
receiving a second measurement result of the first sensing signal, wherein the second measurement result is used to determine the sensing result of the terminal device at the target point.

20. The method according to claim 19, wherein sending the first measurement result of the first sensing signal comprises:
sending a measurement result of the first sensing signal, wherein the measurement result of the first sensing signal comprises the first measurement result and the second measurement result.

21. The method according to claim 19 or 20, wherein the second measurement result comprises feature information respectively corresponding to at least one point, the feature information comprises at least one of position information, a movement direction, and a movement speed, and the second measurement result is a measurement result that is of the first sensing signal and that is obtained through measurement by a device that performs collaborative measurement on the first sensing signal.

22. The method according to any one of claims 19 to 21, wherein the method further comprises:
receiving at least one of position information or time information of the device configured to perform collaborative measurement on the first sensing signal, wherein at least one of the position information or the time information of the device configured to perform collaborative measurement on the first sensing signal is used to determine a sensing result in the signal coverage of the first sensing signal.

23. The method according to claim 18, wherein before sending the first sensing signal, the method further comprises:
sending a configuration parameter of the first sensing signal.

24. The method according to any one of claims 19 to 23, wherein the first measurement result comprises the feature information respectively corresponding to the at least one point, and the feature information comprises at least one of the position information, the movement direction, and the movement speed.

25. A communication apparatus, wherein the communication apparatus comprises a transceiver module and a processing module;
the transceiver module is configured to perform a receiving behavior or a sending behavior in the method according to any one of claims 1 to 17, or configured to perform a receiving behavior or a sending behavior in the method according to any one of claims 18 to 24; and
the processing module is configured to perform a processing behavior in the method according to any one of claims 1 to 17, or configured to perform a processing behavior in the method according to any one of claims 18 to 24.

26. A communication apparatus, wherein the communication apparatus comprises a processor, and the processor is configured to run a computer program or instructions, so that the communication apparatus performs the method according to any one of claims 1 to 17, or the communication apparatus performs the method according to any one of claims 18 to 24.

27. A computer-readable storage medium, wherein the computer-readable storage medium stores computer instructions or a program; and when the computer instructions or the program is run on a computer, the method according to any one of claims 1 to 17 is performed, or the method according to any one of claims 18 to 24 is performed.

28. A computer program product, wherein when the computer program product runs on a communication apparatus, the communication apparatus is enabled to perform the method according to any one of claims 1 to 17, or the communication apparatus is enabled to perform the method according to any one of claims 18 to 24.

29. A chip, comprising a processor, wherein the processor is coupled to a memory, the memory is configured to store a program or instructions, and when the program or the instructions are executed by the processor, the chip is enabled to perform the method according to any one of claims 1 to 17, or the chip is enabled to perform the method according to any one of claims 18 to 24.
